# EUROPEAN PATENT APPLICATION

(11) **EP 4 199 624 A1**
(43) Date of publication of application: **21.06.2023**
(21) Application number: 21857583.5
(22) Date of filing: 13.08.2021
(51) Int. Cl.: H04W 72/08

(54) **OPERATION METHOD, TRANSMISSION METHOD, AND RELATED DEVICE**

(30) Priority: 17.08.2020 CN 202010828074
(71) Applicant: Vivo Mobile Communication Co., Ltd., Dongguan, Guangdong 523863 (CN)
(72) Inventor: PENG, Shuyan, Dongguan, Guangdong 523863 (CN); JI, Zichao, Dongguan, Guangdong 523863 (CN); LIU, Siqi, Dongguan, Guangdong 523863 (CN)
(74) Representative: Lavoix
(86) International application number: PCT/CN2021/112459
(87) International publication number: WO 2022/037488

(57) **Abstract**

This application discloses an operating method, a sending method, and a related device. The operating method includes: sensing a first object, to obtain a first sensing result; and performing a first operation correlated with N windows according to the first sensing result, where N is a positive integer.

## Description

### CROSS-REFERENCE TO RELATED APPLICATIONS

This application claims priority to Chinese Patent Application No. 202010828074. X filed in China on August 17, 2020, which is incorporated herein by reference in its entirety.

### TECHNICAL FIELD

This application relates to the field of communications technologies, and in particular, to an operating method, a sending method, and a related device.

### BACKGROUND

Sidelink (sidelink, SL) may include two resource allocation modes (mode). One is a mode 1, in which a base station schedules resources; and the other one is a mode 2, in which what resources to use for transmission depends on a terminal. In the mode 2, during a resource selection, a terminal first performs sensing, and selects a resource based on a sensing result, to perform a resource reservation.

In the prior LTE mechanism, a configuration of a partial sensing window may be adopted. Because the partial sensing window is semi-statically configured and cannot perform matching according to a real-time service requirement in a system, a location where the sensing window is configured needs not to be sensed, which increases unnecessary energy consumption of the terminal and causes a relatively high power consumption of the terminal.

### SUMMARY

Embodiments of this application provide an operating method, a sending method, and a related device, which can solve the problem of the relatively high power consumption of a terminal caused by that a location where the sensing windows are configured needs not to be sensed.

A first aspect provides an operating method, performed by a terminal. The method includes:
sensing a first object, to obtain a first sensing result; and
performing a first operation correlated with N windows according to the first sensing result, where
N is a positive integer.

A second aspect provides a sending method, performed by a network-side device. The method includes:
sending a first object.

A third aspect provides an operating apparatus. The operating apparatus includes:
a sensing module, configured to sense a first object, to obtain a first sensing result; and
a first execution module, configured to perform a first operation correlated with N windows according to the first sensing result, where
N is a positive integer.

A fourth aspect provides a sending apparatus. The sending apparatus includes:
a sending module, configured to send a first object.

According to a fifth aspect, a communication device is provided, including a processor, a memory, and a program or an instruction stored in the memory and executable on the processor, where the program or instruction, when executed by the processor, implements the steps of the method according to the first aspect, or implements the steps of the method according to the second aspect.

According to a sixth aspect, a readable storage medium is provided, storing a program or instruction, where the program or instruction, when executed by a processor, implements the steps of the method according to the first aspect, or implements the steps of the method according to the second aspect.

According to a seventh aspect, a chip is provided, including a processor and a communication interface, where the communication interface is coupled to the processor, and the processor is configured to run a program or an instruction on a network-side device to implement the method according to the first aspect, or implement the method according to the second aspect.

In the embodiments of this application, the terminal may sense a first object, to obtain a first sensing result, and perform a first operation correlated with N windows according to the first sensing result, where N is a positive integer. Hence, in the embodiments of this application, the first operation performed by the terminal in the N windows is correlated with the sensing result of the first object. In this way, the terminal may not perform sensing in the N windows. In other words, sensing in a configured window is not an operation that needs to be performed. Therefore, the power consumption of the terminal can be reduced.

### BRIEF DESCRIPTION OF THE DRAWINGS

FIG. 1 is a block diagram of an applicable radio communication system according to an embodiment of this application;
FIG. 2 is a flowchart of sensing and a resource selection or resource reselection according to an embodiment of this application;
FIG. 3 is a schematic diagram of partial sensing according to an embodiment of this application;
FIG. 4 is a flowchart of an operating method according to an embodiment of this application;
FIG. 5 is a flowchart of a sending method according to an embodiment of this application;
FIG. 6a is a first schematic diagram of sensing windows according to an embodiment of this application;
FIG. 6b is a second schematic diagram of sensing windows according to an embodiment of this application;
FIG. 6c is a third schematic diagram of sensing windows according to an embodiment of this application;
FIG. 7 is a structural diagram of an operating apparatus according to an embodiment of this application;
FIG. 8 is a structural diagram of a sending apparatus according to an embodiment of this application;
FIG. 9 is a first structural diagram of a communication device according to an embodiment of this application; and
FIG. 10 is a second structural diagram of a communication device according to an embodiment of this application.

### DETAILED DESCRIPTION

The technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It may be understood that the data used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in this embodiment of this application are often used interchangeably, and the described technologies may be used both for the systems and radio technologies mentioned above and may also be used for other systems and radio technologies. However, the following descriptions describe a new radio (New Radio, NR) system for the objective of being used as an example, and NR terms are used in most of the descriptions below. These technologies may also be applied to applications other than NR system applications, such as a 6th generation (6th Generation, 6G) communication system.

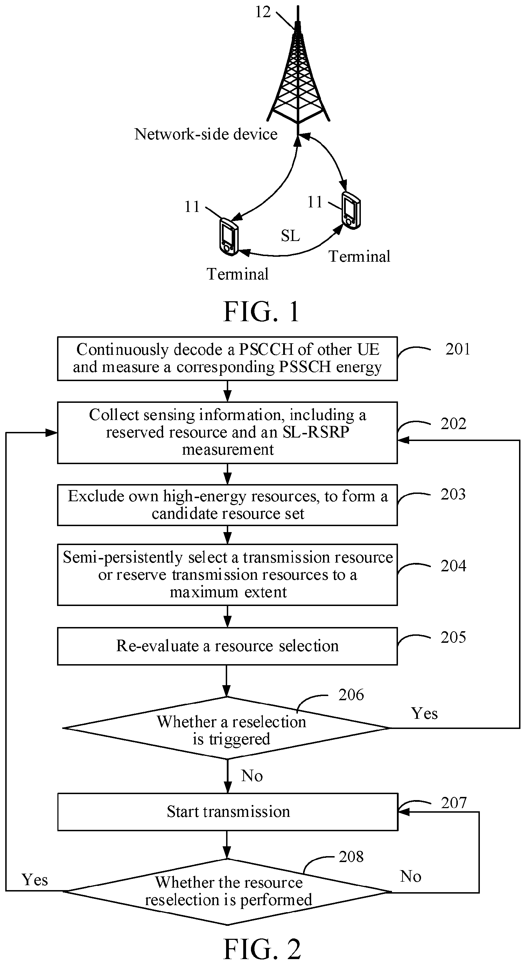

FIG. 1 is a block diagram of an applicable radio communication system according to an embodiment of this application. The radio communication system includes a terminal 11 and a network-side device 12. The terminal 11 may also be referred to as a terminal device or a user equipment (User Equipment, UE). The terminal 11 may be a terminal-side device such as a mobile phone, a tablet computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device) or in-vehicle equipment (VUE), or a pedestrian terminal (PUE). The wearable device includes: a bracelet, a headphone, glasses, or the like. It should be noted that the embodiments of this application are not limited to the specific type of the terminal 11. The network-side device 12 may be a base station or a core network. The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a B node, an evolved B node (eNB), a home B node, a home evolved B node, a WLAN access point, a Wi-Fi node, a transmitting receiving point (Transmitting Receiving Point, TRP) or another suitable term in the field, as long as the same technical effect is achieved, and the base station is not limited to specific technical terms.

For ease of understanding, some of the content involved in the embodiments of this application are described below:

### I. Sidelink (sidelink, SL).

SL transmission: For direct data transmission between UEs on a physical layer. In other words, the UEs perform direct data transmission therebetween without using a network-side device. As shown in FIG. 1, UE may communicate with a network-side device, or may communicate with other UE through an SL.

### II. Resource allocation.

SLs may include two resource allocation modes (mode). One is a mode 1, in which a base station schedules resources, and in this case, resource information may come from a broadcast message of the base station or pre-configured information; and the other one is a mode 2, in which what resources to use for transmission depends on UE. If the UE operates within a coverage of the base station and has a radio resource control (Radio Resource Control, RRC) connection with the base station, the UE may operate in the mode 1 and/or the mode 2. If the UE operates within a coverage of the base station but does not have an RRC connection with the base station, the UE can only operate in the mode 2. If the UE is beyond a coverage of the base station, the UE can only operate in the mode 2 and perform SL transmission according to the pre-configured information.

For the mode 2, a specific working method is in the following:
1) Transmit (TX) UE first determines a resource selection window after a resource selection is triggered, a lower boundary of the resource selection window is at a T1 time after the resource selection is triggered, and an upper boundary of the resource selection is at a T2 time after the trigger. T2 may be a value selected by the UE within a packet delay budget (Packet Delay Budget, PDB) of TB transmission of the UE, and T2 is not earlier than T1.
2) Before the resource selection, the UE needs to determine a candidate resource set (Candidate Resource Set) for the resource selection. A reference signal received power (Reference Signal Received Power, RSRP) measured on a resource in the resource selection window is compared with a corresponding RSRP threshold (threshold). If the RSRP is less than the RSRP threshold, the resource may be included in the candidate resource set.
3) After the resource set is determined, the UE randomly selects a transmission resource from the candidate resource set. In addition, the UE may reserve a transmission resource for a next transmission in this transmission.

A specific process may be referred to in FIG. 2. As shown in FIG. 2, sensing and a resource selection/reselection process may include the following steps:
Step 201: Continuously decode a PSCCH of other UE and measure a corresponding PSSCH energy (keep decoding other UE's PSCCH and measuring corresponding PSSCH energy).
Step 202: Collect sensing information, including a reserved resource and an SL-RSRP measurement (Collect sensing information including reserved resources and SL-RSRP measurements).
Step 203: Exclude own high-energy resources, to form a candidate resource set (Exclude own, and high-energy resources, and form candidate resource set).
Step 204: Semi-persistently select a transmission resource or reserve transmission resources to a maximum extent with a start time m (Select Tx resource semi-persistently, or up to maximum reservations, with start time 'm').
Step 205: Re-evaluate a resource selection (Re-evaluate resource selection).
Step 206: Whether a reselection is triggered (Re-selection triggered?).

If the reselection is triggered, perform step 202. If the reselection is not triggered, perform step 207.

Step 207: Begin transmitting (Begin transmitting).

Step 208: Whether the resource reselection is performed (Resource re-selection?).

If the resource reselection is performed, the process is restarted (Restart process) and step 202 is performed. If the resource reselection is not performed, the reserved transmission resource is continuously used (Continue using reservation) and step 207 is performed.

### III. Resource selection of pedestrian user equipment (Pedestrian user equipment, PUE) in the Long Term Evolution (Long Term Evolution, LTE).

In the LTE, partial sensing is mainly designed to save power and to support the PUE. The PUE supports two modes of resource selection methods. One is random resource selection; and the other mode is to first perform partial sensing (partial sensing), select a resource based on a result of the partial sensing, and perform semi-static resource reservation. The PUE selects which mode is configured for an RRC, and in a case that the RRC is configured to support the resource selections of the two modes, which resource selection mode to use depends on UE implementation.

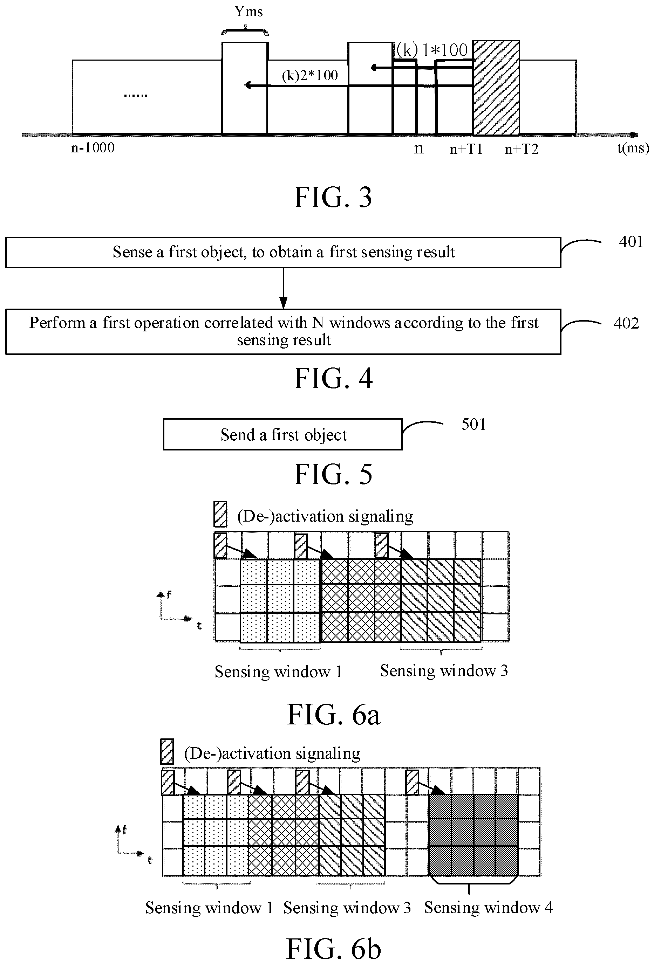

Specifically, the method for the terminal to perform partial sensing and resource sensing may be referred to in FIG. 3.

In FIG. 3, a window not filled with a pattern may be regarded as a PUE sensing window, which is within a range of [n-1000, n]. For a sensing window, an interval obtained by pushing backwards by 100*k using the selection window filled with a pattern as a location reference and 100 as a step length is a location that can be sensed.

A location of the selection window and a length Y (a minimum value of Y is a parameter configured by the RRC) depends on terminal implementation, k is a parameter configured by the RRC, and k may be in a value range of 10 bitmaps (bitmap) and indicates a location of the sensing window.

After sensing sidelink control information (Sidelink Control information, SCI) sent by another terminal in the sensing window, the terminal deduces a resource reservation situation of the another terminal in the selection window according to the sensed SCI and a reservation period. The UE may exclude a resource that does not satisfy a condition from the selection window according to the information. At least 20% (20% of the window length Y) of the remaining resources are selected as a candidate resource set, the candidate resource set is reported to a Media Access Control (Media Access Control, MAC) layer, and the MAC layer randomly selects a resource from the candidate resource set as a candidate resource of the UE. The UE periodically reserves the selected resource and the reservation period is indicated in the SCI.

### V. New Radio (New Radio, NR) dynamic sensing window.

In the NR, before a resource selection/reselection, a dynamic sensing window may be started, and the dynamic sensing window is dynamically configured/enabled according to a requirement of a terminal.

FIG. 4 is a flowchart of an operating method according to an embodiment of this application. The operating method in this embodiment of this application may be performed by a first terminal. The first terminal may be a terminal that requires a resource selection, but is not limited thereto.

As shown in FIG. 4, the operating method may include the following steps:
Step 401: Sense a first object, to obtain a first sensing result.

In this embodiment of this application, the first object may include one or more objects, which may be a signal or a channel. The first object may satisfy at least one of the following:
1) Optionally, the first object includes at least one of the following: a physical sidelink control channel (Physical Sidelink Control Channel, PSCCH); a physical sidelink shared channel (Physical Sidelink Shared Channel, PSSCH); a demodulation reference signal (Demodulation Reference Signal, DMRS); a physical sidelink feedback channel (Physical Sidelink Feedback Channel, PSFCH); a sequence; sidelink control information (Sidelink Control information, SCI); a channel state information reference signal (Channel State Information Reference Signal, CSI-RS); or a phase tracking reference signal (Phase Tracking Reference Signal, PTRS).
   In a specific implementation, the sequence may be a GOLD sequence or a ZC sequence, but it is not limited thereto. The SCI may be a first-stage SCI (SCI format 1-X) or a second-stage SCI (SCI format 2-X). X represents that an optional parameter is A, B, C, D, or the like, but it is not limited thereto.
2) Optionally, the first object is at least one of the following: an object in a target format; an object scrambled by a target radio network temporary identifier (Radio Network Temporary Identifier, RNTI); an object scrambled by a target sequence; or an object initialized by a target value.
   In this optional implementation, objects may be distinguished by formats. For example, a format of an object 1 is a format a and a format of an object 2 is a format b. The objects may be distinguished by scrambled RNTIs. For example, an object 1 is an object scrambled by a first RNTI and an object 2 is an object scrambled by a second RNTI. The objects may be distinguished by scrambled sequences. For example, an object 1 is an object scrambled by a sequence a and an object 2 is an object scrambled by a sequence b. The objects may be distinguished by initialized values. For example, an object 1 is an object initialized by a first value and an object 2 is an object initialized by a second value. For example, two objects are used, but this application is not limited to defining two objects.
3) Optionally, a resource of the first object satisfies at least one of the following:
   the resource of the first object is a pre-defined, pre-configured or configured resource; or the resource of the first object is obtained according to a pre-defined, pre-configured or configured rule;
   the resource of the first object is located in any of the following: highest numbered L subchannels (subchannel) in a resource pool, highest numbered L physical resource blocks (Physical Resource Blocks, PRBs) in a resource pool or a subchannel, highest numbered L PRB groups in a resource pool or a subchannel, lowest numbered L subchannels in a resource pool, lowest numbered L PRBs in a resource pool or a subchannel, or lowest numbered L PRB groups in a resource pool or a subchannel;
   the resource of the first object and a resource of a first channel satisfy a frequency division multiplexing (Frequency Division Multiplexing, FDM) or code division multiplexing (Code Division Multiplexing, CDM) relationship, and the first channel is a PSCCH, a PSSCH, or a PSFCH;
   the resource of the first object occupies M symbols;
   the resource of the first object occupies last M symbols of a first slot;
   the resource of the first object is mapped from an i^{th} symbol of a first slot;
   the resource of the first object is correlated with a resource configuration of a PSFCH;
   the resource of the first object occupies the first available sidelink SL symbol (for example, an automatic gain control (Automatic Gain Control, AGC) symbol, or the like) in a first slot; or
   a configuration corresponding to the resource of the first object includes at least one of a periodicity configuration and an offset configuration, where
   the first slot is a slot where the first object is; and L, M, and i are all positive integers. Optionally, in some implementations, the first slot may be a slot in which no PSFCH exists, but it may be understood that, in other implementations, the first slot may be a slot in which a PSFCH exists.

In a specific implementation, the resource may include at least one of a time domain resource, a frequency domain resource, a code domain resource, or a space domain resource.

The resource of the first object and the resource of the first channel satisfying the FDM relationship may be understood as: the resource of the first object and the resource of the first channel are FDM resources. Similarly, the resource of the first object and the resource of the first channel satisfying the CDM relationship may be understood as: the resource of the first object and the resource of the first channel are CDM resources. The resource of the first object and the resource of the first channel satisfying the frequency division multiplexing FDM or the code division multiplexing CDM relationship may be regarded as: the resource of the first object and an SL resource satisfy an FDM or CDM relationship.

In a case that the resource of the first object occupies M symbols, the M symbols occupied by the first object may be continuous or may be discontinuous, which may be specifically determined according to an actual condition, and is not limited in this embodiment of this application.

The resource of the first object being correlated with the resource configuration of the PSFCH may include at least one of the following: the resource of the first object occupies at least a part of symbols of the PSFCH; the resource of the first object and a frequency domain resource of the PSFCH satisfy an FDM relationship; the resource of the first object is at least partially overlapped with a resource occupied by the PSFCH; or the resource of the first object and the PSFCH satisfy a CDM relationship.

In a case that the configuration corresponding to the resource of the first object includes a periodicity configuration, the resource of the first object may be a periodicity resource. During implementation, the first object may occur periodically in a resource pool. In a case that the configuration corresponding to the resource of the first object includes an offset configuration, a time domain resource of the first object may be an offset value at a specific location in a resource pool. For example, the time domain resource of the first object is first n slots relative to particular window locations, where n is a positive integer.

In this embodiment of this application, optionally, the first sensing result may include at least one of the following:
a demodulation result of the first object;
an information carrying result of the first object;
an energy sensing result of the first object; or
a sequence sensing result of the first object.

A detailed description is as follows:
For the case where the first sensing result includes the demodulation result of the first object, the demodulation result of the first object may be any of the following: the first object is successfully demodulated; or the first object is not successfully demodulated.

For the case where the first sensing result includes the information carrying result of the first object, the sensing the first object may be specifically embodied as: sensing a type of indication information carried by the first object. The type of the indication information includes: first indication information and second indication information, where the first indication information is used for instructing to activate a window, and therefore, in some implementations, the first indication information may also be referred to as an activation signaling; and the second indication information is used for instructing to deactivate a window, and therefore, in some implementations, the second indication information may also be referred to as a deactivation signaling. The information carrying result of the first object may be any of the following: the first indication information; and the second indication information.

For the case where the first sensing result includes the energy sensing result of the first object, the sensing the first object may be specifically embodied as: sensing an energy of the first object. Optionally, the energy sensing result of the first object may include at least one of the following: a reference signal received power (Reference Signal Received Power, RSRP); a received signal strength indication (Received Signal Strength Indication, RSSI); a reference signal received quality (Reference Signal Received Quality, RSRQ); a signal-to-noise and interference ratio (Signal-to-Noise and Interference Ratio, SINR); a block error rate (Block Error Rate, BLER); an energy or an average of energies of at least one resource element (Resource Element, RE); or energy or an average of energies on at least one symbol. Further, the RSRP may be a linear average of RSRPs on a part or all REs that carry the first object; and the RSSI may be a linear average of RSSIs on all or a part of OFDM symbols that carry the first object.

For the case where the first sensing result includes the sequence sensing result of the first object, the sensing the first object may be specifically embodied as any of the following: sensing a sequence; or blind sensing the first object by using a pre-defined, pre-configured or configured sequence.

In a case that the sensing the first object is specifically embodied as sensing a sequence, the sequence sensing result of the first object may include any of the following: a sequence is sensed; or a type of a sensed sequence. Optionally, the type of the sensed sequence may include: a first sequence and a second sequence, where the first sequence corresponds to an operation of activating a window and the second sequence corresponds to an operation of deactivating a window.

In a case that the sensing the first object is specifically embodied as sensing the first object by using a pre-defined, pre-configured or configured sequence, the sequence sensing result of the first object may include: a type of a sequence of the first object is sensed. Optionally, the blind sensed type of the sequence of the first object may include: a third sequence and a fourth sequence, where the third sequence corresponds to an operation of activating a window and the fourth sequence corresponds to an operation of deactivating a window.

Step 402: Perform a first operation correlated with N windows according to the first sensing result, where
N is a positive integer. It should be noted that the window in this embodiment of this application may be a sensing window or a resource selection window (or referred to as a selection window), and may be specifically determined according to an actual situation, which is not limited in this embodiment of this application.

In a specific implementation, the first terminal may perform the first operation according to the first sensing result. The first operation is correlated with the N windows. During implementation, the first operation may act on: a part or all of the N windows. A window on which the first operation specifically acts may be determined according to an actual situation, which is not limited in this embodiment of this application. For example, the first operation may directly act on the N windows, or may act only on a part of the N windows under other constraints.

It should be noted that, in this embodiment of this application, an initial state of the N windows may be an activated state, namely, an enabled state or an available state, and in this case, if the state of the N windows does not change, the first terminal performs operations such as sensing and a resource selection in the N windows. In this way, in a case that the N windows do not match a service requirement, unnecessary energy loss of the terminal is increased, resulting in a high power consumption of the terminal.

The initial state of the N windows may be a deactivated state, namely, an unavailable state, and in this case, if the state of the N windows does not change, the first terminal does not perform operations such as sensing and a resource selection in the N windows. In this way, in a case that the terminal needs to perform a resource selection based on the sensing result of the N windows, because there is no activated window to sense an interference situation, effective information for the resource selection cannot be provided, which may cause collision between a selected resource and a resource of another terminal. Consequently, an increase in the number of retransmissions is caused, further leading to an increase in energy consumption, and the primary purpose of power saving is not achieved; or data packet transmission failure is caused, leading to a severe packet loss problem in the system.

Therefore, in this embodiment of this application, the terminal may perform the first operation in the N windows according to the first sensing result, so as to reduce the power consumption of the terminal and improve the reliability of data transmission.

Optionally, the first operation may include at least one of the following:
activating a target window;
deactivating a target window;
performing a second operation in a target window;
stopping performing a second operation in a target window;
performing a first resource selection in a target window;
performing a second resource selection in a target window; or
ignoring a target window, where
the target window is a part or all of the N windows; and the second operation includes at least one of a sending operation, a sensing operation, a receiving operation, or a measurement operation.

A detailed description is as follows:
In a case that the first operation includes activating a target window, after the first terminal performs the first operation, the target window is in an activated state, namely, an enabled state or an available state. Therefore, further, the first terminal may perform a second operation in the target window. Hence, the first operation may further include performing the second operation in the target window.

In a case that the first operation may include only performing the second operation in the target window, after obtaining the first sensing result, the first terminal may directly perform the second operation in the target window. In a case that the first operation includes deactivating the target window, after the first terminal performs the first operation, the target window is in a deactivated state, namely, an unavailable state. Therefore, further, the first terminal may stop performing the second operation in the target window, so that the power consumption of the terminal can be reduced. Hence, the first operation may further include stopping performing the second operation in the target window.

In a case that the first operation may include only stopping performing the second operation in the target window, after obtaining the first sensing result, the first terminal may directly stop performing the second operation in the target window, without performing a deactivation operation in the target window.

The first resource selection and the second resource selection are described below: the first resource selection may be regarded as a conventional resource selection, and during implementation, a terminal may first perform sensing in a window and then perform a resource selection according to a sensing result of the window; and the second resource selection may be regarded as a random resource selection, and during implementation, a terminal may directly perform a random selection of a resource without sensing a window.

In a case that the first operation includes ignoring a target window, the first terminal may skip the target window and re-perform a sensing operation on the first object.

In a specific implementation, in some implementations, the first operation may include at least one of the following: deactivating the target window; stopping performing the second operation in the target window; or ignoring the target window. In this way, in a case that the initial state of the N windows is an activated state, namely, an enabled state or an available state and the target window does not match a service requirement, unnecessary sensing of the terminal can be reduced or omitted, so that the effect of reducing the power consumption of the terminal can be achieved.

In some implementations, the first operation may include at least one of the following: activating the target window; or performing the second operation in the target window. In this way, in a case that the initial state of the N windows is a deactivated state, that is, an unavailable state and the terminal needs to perform a resource selection based on a sensing result of the N windows, the first terminal may sense an interference state in a second window to provide effective information for the resource selection, so as to reduce or avoid collision between a selected resource and a resource of another terminal, or reduce or avoid data packet transmission failure, so that the reliability of the resource selection or data packet transmission can be improved, and further the power consumption of the terminal can be reduced.

In the operating method of this embodiment of this application, the terminal may sense a first object, to obtain a first sensing result, and perform a first operation correlated with N windows according to the first sensing result, where N is a positive integer. Hence, in the embodiments of this application, the first operation performed by the terminal in the N windows is correlated with the sensing result of the first object. In this way, the terminal may not perform sensing in the N windows. In other words, sensing in a configured window is not an operation that needs to be performed. Therefore, the power consumption of the terminal can be reduced.

In this embodiment of this application, optionally, the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service (Quality of Service, QoS) associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, where
the target priorities are priorities carried by a physical layer, logical channel priorities, or logical channel group priorities; and P, Q, T, and a are all positive integers.

In a specific implementation, the periodicity information may be a periodicity value or a periodicity value set.

For the case where the periodicity information of the resource reservations corresponding to different first objects is different, optionally, a plurality of sequences respectively correspond to different periodicity values, or correspond to different periodicity value sets. For example, a sequence 1 corresponds to a periodicity value of 0, a sequence 2 corresponds to a periodicity value < 100, and a sequence 3 corresponds to a periodicity value > 100.

For the case where the periodicity information of the resource reservations corresponding to different sensing locations of the first object is different, optionally, a plurality of sensing locations respectively correspond to different given periodicity values, or correspond to different periodicity value sets. For example, a sensing location 1 corresponds to a periodicity value of 0, and a sensing location 2 corresponds to a periodicity value of non-zero.

For the case where the quality of service (Quality of Service, QoS) associated with the P first objects corresponds to Q resource selections or resource selection configurations, QoS associated with one/more of the first objects may correspond to one/more resource selections or resource selection configurations.

For the case where the target priorities associated with the P first objects correspond to Q resource selections or resource selection configurations, a target priority associated with one/more first objects may correspond to one/more resource selections or resource selection configurations.

For the case where a candidate resource corresponding to the first object is located in a target resource, the target resource is located before a reserved resource, and the target resource and the reserved resource are at an interval of T or T+a resources, T may be pre-defined, pre-configured or configured, for example, T = 32 slots. The unit of the resource may include at least one of the following: slot, symbol, subframe, frame, millisecond, period (PSFCH period, sensing step length, discontinuous reception (Discontinuous Reception, DRX) period), or the like. a may be a processing time for sensing the first object or a quantitative value of the processing time, or may be pre-defined, pre-configured or configured, which may be specifically determined according to an actual situation, and is not limited in this embodiment of this application.

Hence, by the foregoing method, the first terminal may further determine at least one of a resource selection and/or a resource selection configuration according to the sensed first object, so that the utilization rate of the first object can be improved.

In this embodiment of this application, the first operation is determined based on a result of this sensing of the first object, that is, the first sensing result. A detailed description is as follows:
1) Optionally, in a case that the first sensing result includes the demodulation result of the first object, the first operation satisfies any of the following:
   in a case that the demodulation result of the first object indicates successfully demodulated to the first object, the first operation includes at least one of the following: activating the target window; or performing the second operation in the target window; and in a case that the demodulation result of the first object indicates not successfully demodulated to the first object, the first operation includes at least one of the following: deactivating the target window; stopping performing the second operation in the target window; or ignoring the target window, where
   the target window is a part or all of the N windows; and the second operation includes at least one of a sending operation, a sensing operation, a receiving operation, or a measurement operation.
2) Optionally, in a case that the first sensing result includes the information carrying result of the first object, the first operation satisfies:
   in a case that the information carrying result of the first object indicates that the first object carries the first indication information, the first operation includes at least one of the following: activating the target window; or performing the second operation in the target window; and in a case that the information carrying result of the first object indicates that the first object carries the second indication information, the first operation includes at least one of the following: deactivating the target window; stopping performing the second operation in the target window; or ignoring the target window, where
   the first indication information is used for instructing to activate a window; the second indication information is used for instructing to deactivate a window; the target window is a part or all of the N windows; and the second operation includes at least one of a sending operation, a sensing operation, a receiving operation, or a measurement operation.

   In a specific implementation, the first indication information and the second indication information may be pre-defined, pre-configured or configured.
3) Optionally, in a case that the first sensing result includes the sequence sensing result of the first object, the first operation satisfies any of the following:
   in a case that the sequence sensing result of the first object indicates that the first sequence is sensed, the first operation includes at least one of the following: activating the target window; or performing the second operation in the target window; and in a case that the sequence sensing result of the first object indicates that the second sequence is sensed, the first operation includes at least one of the following: deactivating the target window; stopping performing the second operation in the target window; or ignoring the target window;
   in a case that the sequence sensing result of the first object indicates that a sequence is sensed, the first operation includes at least one of the following: activating the target window; or performing the second operation in the target window;
   in a case that the sequence sensing result of the first object indicates that the sequence of the first object is sensed to be a third sequence, the first operation includes at least one of the following: activating the target window; or performing the second operation in the target window; and in a case that the sequence sensing result of the first object indicates that the first object is sensed to be a fourth sequence, the first operation includes at least one of the following: activating the target window; or performing the second operation in the target window, where
   the target window is a part or all of the N windows; and the second operation includes at least one of a sending operation, a sensing operation, a receiving operation, or a measurement operation.

In a specific implementation, the first sequence and the second sequence may be pre-defined, pre-configured or configured. Optionally, the second sequence is a cyclic offset of the first sequence. The third sequence and the fourth sequence may be pre-defined, pre-configured or configured. Optionally, the fourth sequence is a cyclic offset of the third sequence.

It should be noted that the first operation satisfies: in a case that the sequence sensing result of the first object indicates that a sequence is sensed, the first operation includes at least one of the following: activating the target window; and in a case that the second operation is performed in the target window and the sequence sensing result of the first object indicates that no sequence is sensed, the first operation may include at least one of the following: deactivating the target window; stopping performing the second operation in the target window; or ignoring the target window.

4) Optionally, in a case that the first sensing result includes the energy sensing result of the first object, the first operation is determined based on a comparison result of the energy sensing result of the first object and R energy thresholds, where R is a positive integer.

In a specific implementation, the R energy thresholds may be pre-defined, pre-configured or configured.

Optionally, the R energy thresholds may correspond to at least one of the following: a resource pool; a terminal; a logical channel; a logical channel group; QoS; a channel occupancy ratio (Channel Occupancy Ratio, CR); a channel busy ratio (Channel Busy Ratio, CBR); and a target priority, where the target priority is a priority carried by a physical layer, a logical channel priority, or a logical channel group priority.

In other words, a configuration method of the R energy thresholds is at least one of the following: configured by each resource pool; configured by each terminal; configured according to a logical channel; configured according to a logical channel group; configured according to a QoS; configured according to a CR/CBR; or configured according to a target priority.

Further, the first operation satisfies any of the following:
a) in a case that R is equal to 1, if the energy sensing result of the first object is less than the energy threshold, the first operation includes at least one of the following: activating the target window; or performing the second operation in the target window; or if the energy sensing result of the first object is greater than or equal to the energy threshold, the first operation includes at least: ignoring the target window; deactivating the target window; or stopping performing the second operation in the target window;
b) in a case that R is equal to 1, if the energy sensing result of the first object is greater than or equal to the energy threshold, the first operation includes at least one of the following: activating the target window; performing the second operation in the target window; or performing the first resource selection in the target window; or if the energy sensing result of the first object is less than the energy threshold, the first operation includes at least one of the following: deactivating the target window; stopping performing the second operation in the target window; or performing the second resource selection in the target window; or
c) in a case that the R energy thresholds include a first energy threshold and a second energy threshold and the first energy threshold is less than the second energy threshold, if the energy sensing result of the first object is less than or equal to the first energy threshold, the first operation includes at least one of the following: performing the second resource selection in the target window; if the energy sensing result of the first object is greater than or equal to the second energy threshold, the first operation includes at least one of the following: ignoring the target window; deactivating the target window; or stopping the second operation in the target window; or if the energy sensing result of the first object is greater than or equal to the first energy threshold and less than the second energy threshold, the first operation includes at least: activating the target window; performing the second operation in the target window; or performing the first resource selection in the target window, where
   the target window is a part or all of the N windows; and the second operation includes at least one of a sending operation, a sensing operation, a receiving operation, or a measurement operation.

In a specific implementation, the energy sensing result of the first object is a situation of an energy measurement result of an RSSI. In a case that the first operation satisfies c), if the energy sensing result of the first object is less than or equal to the first energy threshold, it indicates that the interference is small, and a resource may be randomly selected to save power; if the energy sensing result of the first object is greater than or equal to the second energy threshold, it indicates that the interference is excessively large, and a resource selection in the target window may not be performed; or if the energy sensing result of the first object is greater than or equal to the first energy threshold and less than the second energy threshold, it indicates that there is a particular amount of interference, and the interference may be avoided by sensing.

Hence, by the foregoing method, for the target window, the first terminal may perform at least one of the following: deactivating the target window; stopping performing the second operation in the target window; or ignoring the target window, so that the effect of reducing the power consumption of the terminal can be achieved.

It should be noted that, for the first object sensed in different times, results of sensing the first object may be the same or different. For different sensing results, first operations performed by the first terminal may be different or the same. In addition, a behavior of performing the first operation by the first terminal according to the first sensing result may be pre-defined, pre-configured or configured, or may be determined based on a pre-defined, pre-configured or configured correspondence.

In a case that the behavior of performing the first operation by the first terminal according to the first sensing result is determined based on the pre-defined, pre-configured or configured correspondence, optionally, before performing the first operation correlated with the N windows according to the first sensing result, the method also includes:
determining the first operation corresponding to the first sensing result according to a second correspondence between the first object and an operation, where
the second correspondence is pre-defined, pre-configured or configured.

A detailed description of the second correspondence is provided below:

Optionally, the second correspondence satisfies at least one of the following:
a demodulation result of the first object corresponds to at least one operation;
an information carrying result of the first object corresponds to at least one operation;
a target comparison result corresponds to at least one operation, and the target comparison result is a comparison result of an energy sensing result of the first object and R energy thresholds, where R is a positive integer; or
a sequence sensing result of the first object corresponds to at least one operation.

A detailed description is as follows:

That a demodulation result of the first object corresponds to at least one operation optionally may include:
in a case that the demodulation result of the first object indicates successfully demodulated to the first object, the at least one operation includes at least one of the following: activating a first window; or performing a second operation in a first window; and in a case that the demodulation result of the first object indicates not successfully demodulated to the first object, the at least one operation includes at least one of the following: deactivating a first window; stopping performing a second operation in a first window; or ignoring a first window, where
the second operation is at least one of a sending operation, a measurement operation, a sensing operation, or a receiving operation; and the first window is a part or all of windows corresponding to the first object.

That information carrying result of the first object corresponds to at least one operation optionally may include at least one of the following:
in a case that the information carrying result of the first object indicates that the first object carries first indication information, the at least one operation includes at least one of the following: activating a first window; or performing a second operation in a first window; and in a case that the information carrying result of the first object indicates that the first object carries second indication information, the at least one operation includes at least one of the following: deactivating a first window; stopping performing a second operation in a first window; or ignoring a first window, where
the first indication information is used for instructing to activate a window; the second indication information is used for instructing to deactivate a window; the second operation is at least one of a sending operation, a measurement operation, a sensing operation, or a receiving operation; and the first window is a part or all of windows corresponding to the first object.

That a sequence sensing result of the first object corresponds to at least one operation optionally may include any of the following:
in a case that the sequence sensing result of the first object indicates that a first sequence is sensed, the at least one operation includes at least one of the following: activating a first window; or performing a second operation in a first window; and in a case that the sequence sensing result of the first object indicates that a second sequence is sensed, the at least one operation includes at least one of the following: activating a first window; or performing a second operation in a first window;
in a case that the sequence sensing result of the first object indicates that a second sequence is sensed, the at least one operation includes at least one of the following: activating a first window; or performing a second operation in a first window;
in a case that the sequence sensing result of the first object indicates that a sequence of the first object is sensed to be a third sequence, the at least one operation includes at least one of the following: activating a first window; performing a second operation in a first window; and in a case that the sequence sensing result of the first object indicates that a sequence of the first object is sensed to be a fourth sequence, the at least one operation includes at least one of the following: activating a first window; or performing a second operation in a first window, where
the second operation is at least one of a sending operation, a measurement operation, a sensing operation, or a receiving operation; and the first window is a part or all of windows corresponding to the first object.

That the target comparison result corresponds to at least one operation optionally may include any of the following:
in a case that R is equal to 1, if the target comparison result indicates that the energy sensing result of the first object is less than the energy threshold, the at least one operation includes at least one of the following: activating a first window; or performing a second operation in a first window; or if the target comparison result is that the energy sensing result of the first object is greater than or equal to the energy threshold, the operation: ignoring a first window; deactivating a first window; or stopping performing a second operation in a first window;
in a case that R is equal to 1, if the target comparison result indicates that the energy sensing result of the first object is greater than or equal to the energy threshold, the at least one operation includes at least one of the following: activating a first window; performing a second operation in a first window; or performing a first resource selection in a first window; or if the target comparison result indicates that the energy sensing result of the first object is less than the energy threshold, the at least one operation includes at least one of the following: deactivating a first window; stopping performing a second operation in a first window; or performing a second resource selection in a first window; or
in a case that the R energy thresholds include a first energy threshold and a second energy threshold and that the first energy threshold is less than the second energy threshold, if the target comparison result indicates that the energy sensing result of the first object is less than or equal to the first energy threshold, the at least one operation includes at least one of the following: performing a second resource selection in a first window; if the target comparison result indicates that the energy sensing result of the first object is greater than or equal to the second energy threshold, the at least one operation includes at least one of the following: ignoring a first window; deactivating a first window; or stopping performing a second operation in a first window; or if the target comparison result indicates that the energy sensing result of the first object is greater than or equal to the first energy threshold and less than the second energy threshold, the operation includes at least: activating a first window; performing a second operation in a first window; or performing a first resource selection in a first window, where
the second operation is at least one of a sending operation, a measurement operation, a sensing operation, or a receiving operation; and the first window is a part or all of windows corresponding to the first object.

In this embodiment of this application, optionally, the first sensing result is represented by any of the following:
M bits, where the M bits include a first value and a second value, the first value is used for instructing to activate a window, the second value is used for instructing to deactivate a window, both the first value and the second value include at least one value, and M is a positive integer; or
a code point, where the code point includes a first-type code point and a second-type code point, the first-type code point is used for instructing to activate a window, the second-type code point is used for instructing to deactivate a window, and both the first-type code point and the second-type code point include at least one code point.

In a specific implementation, in a case that the first sensing result is represented by M bits, the M bits may be carried in indication information, or may be carried in a bitmap or a bit string. The first value and the second value may be pre-defined, pre-configured or configured.

Both the first value and the second value include at least one value, which may be determined according to an actual situation, and is not limited in this embodiment of this application. In a case that the first value or the second value includes two or more values, the first value or the second value may alternatively be used for indicating other information, such as the foregoing periodicity information of the resource reservations, and information indicated by different values is different.

For ease of understanding, an example is described as follows:
Assuming that the first sensing result is represented by two bits, the M bits include four values, respectively, 00, 01, 10, and 11.

In an implementation, the three values 00, 01, and 10 may be regarded as the first value, and 11 may be regarded as the second value. Further, 00 may indicate that the periodicity value of the resource reservations is 0, 01 may indicate that the periodicity value of the resource reservations is 50, and 10 may indicate that the periodicity value of the resource reservations is 100.

In this case, if the first sensing result is 01, the first terminal may perform at least one of the following according to the first sensing result: activating a target window; and performing a second operation in a target window. In addition, the first terminal may determine that the periodicity value of the resource reservations of the resource selection window corresponding to the first object is 50.

In addition, in a case that the first sensing result is represented by M bits, in a first implementation, the M bits may correspond to one window; and in a second implementation, the M bits may correspond to two or more windows. Further, in the second implementation, one bit of the M bits may correspond to two or more windows; or a bitmap including the M bits may correspond to a window, where each bit indicates an activated state of one or more windows. The correspondence between M bits and a window may be pre-defined, pre-configured or configured, which may be specifically determined according to an actual situation, and is not limited in this embodiment of this application.

In a case that the first sensing result is represented by a code point, implementation thereof is the same as that of representing the first sensing result by M bits. For example, some or a particular code point instructs to activate a window, and some other or another particular code point instructs to deactivate a window. For details, reference may be made to the description of representing the first sensing result by M bits, and details are not described herein again.

In this embodiment of this application, optionally, the N windows are determined based on a third correspondence between the first object and a window, where
the third correspondence is pre-defined, pre-configured or configured.

In this optional implementation, the first terminal may perform the first operation correlated with the N windows according to the first sensing result based on the correspondence between the first object and the sensing window and/or the resource selection window.

For ease of understanding, for example, the first object is an activation/deactivation signaling for exemplary description.

The first terminal may obtain a location of a sensing window according to a correspondence between the activation/deactivation signaling and the sensing window and a location of the activation/deactivation signaling, and perform sensing in the sensing window.

The first terminal may obtain a location of a resource selection window/resource selection according to a correspondence between the activation/deactivation signaling and a location of the resource selection window/resource selection and a location of the activation/deactivation signaling, perform a resource selection in the resource selection window, or send information on the location of the resource selection.

Further, the third correspondence may satisfy at least one of the following:
one piece of information carried by the first object corresponds to at least one window;
different first objects correspond to different windows; or
different sensing locations of the first object correspond to different windows.

In a specific implementation, for sensing of the first object in different times, because information carried by the first object, a representation form of the first object or a sensing location of the first object may change, windows corresponding to the first object may be different or the same. For a current (or this) sensing of the first object, a corresponding window may be determined by looking up the third correspondence.

For ease of understanding, an example is as follows:
Example 1: It is assumed that in the third correspondence, information 1 corresponds to a window 1, information 2 corresponds to a window 2, and information 3 corresponds to a window 3. If a sensing result of sensing the first object is that the first object is sensed to carry the information 1, the first terminal may perform the first operation correlated with the window 1 according to the sensing result.
Example 2: It is assumed that in the third correspondence, a sequence 1 corresponds to a window 1, a sequence 2 corresponds to a window 2, and a sequence 3 corresponds to a window 3. If a sensing result of sensing the first object is that the sequence 2 is sensed, the first terminal may perform the first operation correlated with the window 2 according to the sensing result.
Example 3: It is assumed that in the third correspondence, a sensing location 1 corresponds to a window 1, a sensing location 2 corresponds to a window 2, and a sensing location 3 corresponds to a window 3. If a sensing result of sensing the first object is that the first object is sensed at the sensing location 2, the first terminal may perform the first operation correlated with the window 3 according to the sensing result.

Optionally, configurations of the N windows are determined based on the third correspondence, where
the configurations of the N windows include at least one of the following:
a start location of at least one window of the N windows;
a window length of at least one window of the N windows;
an end location of at least one window of the N windows; or
a period of at least one window of the N windows.

In other words, the third correspondence may include at least one of a start location of a window (for example, a slot interval from a sensed PSCCH), a window length, an end location, and a period. In this way, after sensing the first object this time, the first terminal may determine the configurations of the N windows corresponding to the first obj ect by looking up the third correspondence.

Optionally, the N windows satisfy at least one of the following:
the N windows are semi-statically configured windows;
the N windows are dynamically configured windows;
the N windows are continuously configured windows;
the N windows are periodically configured windows; or
the N windows are non-periodically configured windows.

In this embodiment of this application, after obtaining the first sensing result, the first terminal may directly perform the first operation, or may perform the first operation only in a case that some conditions are satisfied.

Optionally, performing the first operation corresponding to the sensing result in the N windows may include:
in a case that second information associated with the first object satisfies a first condition, performing the first operation corresponding to the sensing result in the N windows, where
the second information includes at least one of the following: a resource pool identifier; a terminal identifier; a service identifier; a cast type; geographic location information; or distance information.

During implementation, that the second information satisfies the first condition may include at least one of the following:
the resource pool identifier associated with the first object a target resource pool identifier, for example, a resource pool -1;
the terminal identifier associated with the first object is a target terminal identifier, for example, a terminal -1;
the service identifier associated with the first object is a target service identifier, for example, a service -1;
the cast type (Cast Type) associated with the first object is a target cast type, for example, unicast, multicast, broadcast, multicast, or the like; or
a first distance is less than a target value, where the first distance is a distance between the first terminal and a target end determined based on geographic location information or distance information.

If the second information satisfies that the first condition includes that the first distance is less than the target value, it indicates that the distance between the first terminal and the target end is excessively large, a possibility of interference between the first terminal and the target end is small, and therefore, the first operation may not be performed.

In a specific implementation, in a case that one or more of the foregoing conditions are satisfied, the first terminal may regard the sensed first object as a valid first object, and may perform the first operation. Otherwise, the first terminal may regard the sensed first object as an invalid first object, may ignore the first object, or may not perform the first operation, so that the effect of further saving power is achieved.

Optionally, performing the first operation corresponding to the sensing result in the N windows may include:
In a case that the fourth condition is satisfied, the first operation corresponding to the sensing result is performed in the N windows, where
the fourth condition may satisfy:
the first terminal has a data packet to be sent; or
the first terminal is triggered to perform a resource selection.

In a specific implementation, the first terminal may autonomously trigger the resource selection, or the target end may trigger the first terminal to perform the resource selection, which may be specifically determined according to an actual situation, and is not limited in this embodiment of this application.

In this embodiment of this application, the first terminal may actively sense the first object, or may be conditionally triggered to sense the first object.

In a case that the first object is conditionally triggered to be sensed, optionally, the sensing the first object includes:
in a case that a second condition is satisfied, sensing the first object, where
the second condition satisfies at least one of the following:
the first terminal has a data packet to be sent;
the first terminal is triggered to perform a resource selection;
a value of an SL resource reselection counter (SL_RESOURCE_RESELECTION_COUNTER) is equal to 0;
a resource pool is reconfigured;
the first terminal does not have a reserved resource; or
the first terminal does not have a resource that satisfies a condition.

In a specific implementation, the second condition may also include any of the following:
the SL resource reselection counter = 0 and when the SL resource reselection counter = 1, a MAC entity randomly selects, with equal probability, a value in an interval [0, 1] which is higher than the probability configured by upper layers in SL-probresourcekeep (SL_RESOURCE_RESELECTION_COU-NTER=0 and when SL _RESOURCE_RESELECTION_COUNTER was equal to 1 the MAC entity randomly selected, with equal probability, a value in the interval [0, 1] which is above the probability configured by upper layers in sl-ProbResourceKeep);
the resource pool is configured or reconfigured by upper layers (the resource pool is configured or reconfigured by upper layers);
there is no selected sidelink grant on the selected resource pool (there is no selected sidelink grant on the selected resource pool);
neither transmission nor retransmission has been performed by a MAC entity on any resource indicated in the selected sidelink grant during the last second (neither transmission nor retransmission has been performed by the MAC entity on any resource indicated in the selected sidelink grant during the last second);
sl-ReselectAfter is configured and the number of consecutive unused transmission opportunities on resources indicated in the selected sidelink grant is equal to sl-ReselectAfter (sl-ReselectAfter is configured and the number of consecutive unused transmission opportunities on resources indicated in the selected sidelink grant is equal to sl-ReselectAfter);
the selected sidelink grant cannot accommodate a radio link control (Radio Link Control, RLC) service data unit (Service Data Unit, SDU) by using the maximum allowed modulation and coding scheme (Modulation and Coding Scheme, MCS) configured by upper layers in sl-maxmc-pssch and the media access control (Media Access Control, MAC) entity selects not to segment the RLC SDU (the selected sidelink grant cannot accommodate a RLC SDU by using the maximum allowed MCS configured by upper layers in sl-MaxMCS-PSSCH and the MAC entity selects not to segment the RLC SDU);
transmission(s) with the selected sidelink grant cannot fulfill the latency requirement of the data in a logical channel according to the associated priority (transmission(s) with the selected sidelink grant cannot fulfill the latency requirement of the data in a logical channel according to the associated priority), and the MAC entity selects not to perform transmission(s) corresponding to a single MAC protocol data unit (Protocol Data Unit, PDU) (the MAC entity selects not to perform transmission(s) corresponding to a single MAC PDU);
a resource(s) of the selected sidelink grant is indicated for re-evaluation or pre-emption by the physical layer as specified (a resource(s) of the selected sidelink grant is indicated for re-evaluation or pre-emption by the physical layer as specified); or
retransmission of a MAC PDU on the selected sidelink grant has been dropped by either SL control or prioritization (retransmission of a MAC PDU on the selected sidelink grant has been dropped by either sidelink congestion control or de-prioritization).

In this way, the first terminal senses the first object only in a case that the second condition is satisfied, so that the number of times that the first terminal senses the first object can be reduced, thereby reducing the power consumption of the terminal.

In this embodiment of this application, optionally, the first object may be sent by a target end, and the target end is a network-side device or a second terminal.

FIG. 5 is a flowchart of a sending method according to an embodiment of this application. The sending method in this embodiment of this application is performed by a target end. The target end is a network-side device or a second terminal, and the second terminal may be a terminal of data to be sent, or a terminal of scheduling.

As shown in FIG. 5, the sending method may include the following steps:
Step 501: Send a first object.

In a specific implementation, the first object may be independent of a resource reservation signaling, or may be carried in a resource reservation signaling.

Optionally, the sending a first object includes:
in a case that a third condition is satisfied, sending the first object, where
the third condition satisfies at least one of the following:
at least one resource is reserved for a target end;
at least one resource is allocated to a target end; or
a target end sends at least one resource reservation signaling.

Optionally, the first object is sent based on a correspondence between the first object and a window.

For ease of understanding, for example, the first object is an activation/deactivation signaling for exemplary description.

The second terminal may obtain (optional) a location of the activation/deactivation signaling according to the correspondence between the activation/deactivation signaling and the sensing window and a location of the sensing window, and send the activation/deactivation signaling at the (optional) location.

The second terminal may obtain (optional) a location of the activation/deactivation signaling according to the correspondence between the activation/deactivation signaling and the resource selection window/resource selection location, and send the activation/deactivation signaling at the (optional) location.

Optionally, the first object includes at least one of the following: a physical sidelink control channel PSCCH; a physical sidelink shared channel PSSCH; a physical sidelink feedback channel PSFCH; a demodulation reference signal DMRS; a sequence; sidelink control information SCI; a channel state information reference signal CSI-RS; or a phase tracking reference signal PTRS.

Optionally, the first object is at least one of the following: an object in a target format; an object scrambled by a target radio network temporary identifier RNTI; an object scrambled by a target sequence; or an object initialized by a target value.

Optionally, a resource of the first object satisfies at least one of the following:
the resource of the first object is a pre-defined, pre-configured or configured resource; or the resource of the first object is obtained according to a pre-defined, pre-configured or configured rule;
the resource of the first object is located in any of the following: highest numbered L subchannels in a resource pool, highest numbered L physical resource blocks PRBs in a resource pool or a subchannel, highest numbered L in a resource pool or a subchannel, lowest numbered L subchannels in a resource pool, lowest numbered L PRBs in a resource pool or a subchannel, or lowest numbered L PRB groups in a resource pool or a subchannel;
the resource of the first object and a resource of a first channel satisfy a frequency division multiplexing FDM or code division multiplexing CDM relationship, and the first channel is a PSCCH, a PSSCH, or a PSFCH;
the resource of the first object occupies M symbols;
the resource of the first object occupies last M symbols of a first slot;
the resource of the first object is mapped from an i^{th} symbol of a first slot;
the resource of the first object is correlated with a resource configuration of a PSFCH;
the resource of the first object occupies the first available sidelink SL symbol in a first slot; or
a configuration corresponding to the resource of the first object includes at least one of a periodicity configuration and an offset configuration, where
the first slot is a slot where the first object is; and L, M, and i are all positive integers.

Optionally, the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, where
the target priorities are priorities carried by a physical layer, logical channel priorities, or logical channel group priorities; and P, Q, T, and a are all positive integers.

According to the operating method of this embodiment of this application, the target end may send a first object to a first terminal, and in this way, the terminal may perform a first operation correlated with N windows according to a first sensing result obtained by sensing the first object, where N is a positive integer. The first operation performed by the terminal is correlated with the sensing result of the first object, and therefore, the terminal does not necessarily perform the sensing in the N windows, so that the power consumption of the terminal can be reduced.

It should be noted that this embodiment serves as an embodiment of the target end corresponding to the method embodiment of FIG. 4, and therefore, reference may be made to related descriptions in the method embodiment of FIG. 4; and in addition, the same beneficial effect can be achieved, and to avoid repetition, details are not described herein again.

It should be noted that the various optional implementations introduced in the embodiments of this application may be implemented in combination with each other, or may be implemented separately, which is not limited in the embodiments of this application.

For ease of understanding, an example is described as follows:

The terminal (for example, a terminal that needs to select a resource) senses a specific signal/channel, obtains a sensing result, and activates/deactivates a sensing window according to the sensing result.

Further, sensing is performed in an activated sensing window.
I. The sensing signal/channel satisfies at least one of the following:
   a) The sensing signal/channel is a PSCCH/PSSCH/PSFCH/DMRS/specific sequence/SCI.
      i. For example, the specific sequence may be: a GOLD sequence, a ZC sequence, or the like.
      ii. For example, the SCI may be a first-stage SCI (SCI format 1-X) or a second-stage SCI (SCI format 2-X). X represents that an optional parameter is A, B, C, D, or the like.
   b) A resource (including at least one of a time domain, a frequency domain, and a code domain) configure of the sensing signal/channel satisfies at least one of the following:
      i. The resource is a pre-defined/pre-configured/configured resource.
      ii. The resource is obtained according to a pre-defined/pre-configured/configured rule.
      iii. The signal/channel is located in L subchannels/PRBs/PRB groups having highest numbers in a resource pool or L subchannels/PRBs/PRB groups having lowest numbers in a resource pool, or the signal/channel and a PSCCH/PSSCH channel or the like are FDM resources, where L is a positive integer.
      iv. The signal occupies M symbols in a time domain.
      v. The signal is located in last M symbols of a slot, or is mapped from an m^{th} symbol (optionally, the signal may be located in a slot where no PSFCH exists, or may be located at an end of a slot).
      vi. The signal is correlated with a configuration of a PSFCH:
         1. being located in at least a part of symbols of the PSFCH, thereby reducing the impact of half-duplexing;
            a) for example, being located in a symbol of the PSFCH, and being FDM or CDM with the PSFCH.
      vii. The first available SL symbol (for example, an AGC symbol) in a slot.
      viii. The resource configuration of the sensing signal/channel includes at least one of a period and an offset (for example, the resource configuration of the sensing signal/channel may occur periodically).
         1. A time domain location can be a periodicity location in a resource pool, or an offset of a specific location in a resource pool (for example, first N slots relative to some window locations).
            c) The signal/channel is in a specific format (for example, a control information format), is scrambled with a specific RNTI, or is scrambled with a specific sequence, or is an object initialized with a specific value.
            d) A resource selection/resource selection configuration is correlated with information of the signal/channel and satisfies at least one of the following:
               i. A plurality of sequences respectively correspond to different periodicity values, or correspond to different periodicity value sets.
                  For example, a sequence 1 corresponds to a periodicity value of 0, a sequence 2 corresponds to a periodicity value < 100, and a sequence 3 corresponds to a periodicity value >= 100.
               ii. A plurality of locations respectively correspond to different given periodicity values, or correspond to different periodicity value sets.
                  For example, a location 1 corresponds to a periodicity value of 0, and a location 2 corresponds to a periodicity value of non-zero.
               iii. One/more QoS correspond to one/more resource selections/resource selection configurations.
               iv. One/more priorities correspond to one/more resource selections/resource selection configurations.

   The priorities may be priorities carried by the physical layer/logical channel priorities/logical channel group priorities.
II. The sensing result indicates successfully demodulated, and/or sensing information (for example, the foregoing first indication information or second indication information) carries activation/deactivation information, and/or energy sensing information, and/or sequence sensing information.
   a) Plainly indicate/implicitly indicate window activation/deactivation.
      i. M bit information indication.
         1. One indication corresponds to one window.
         2. One indication corresponds to a plurality of windows.
            a) 1 bit activates a plurality of windows.
            b) M bit bitmap activates a plurality of windows.
      ii. A specific code point is represented as window activation/deactivation (implicit indication).
      iii. If enabled, a plurality of semi-statically configured windows are instructed to be activated, or one dynamic window is instructed to be activated, which is not limited herein. (The sensing window may be periodically or dynamically configured).
   b) Optionally, if determining is performed based on energy sensing, the energy sensing information is at least one of the following: an RSRP, an RSSI, an RSRQ, an SINR, an energy/average of energies of one or more REs, and an energy/average energies on one or more symbols.
      i. The RSRP may be a linear average of a part or all of the REs carrying a signal.
      ii. The RSSI may be a linear average of all or a part of carrying OFDM symbols.
   c) Optionally, if determined based on sequence sensing, a relationship between a sequence and activation/deactivation is pre-defined/pre-configured/configured.
      i. A sequence 1 indicates activation and a sequence 2 indicates deactivation.
         Optionally, a sequence 2 is a cyclic offset of a sequence 1.
      ii. Alternatively, a single sequence is used. If the sequence is sensed, it indicates activation.
         In other words, if the sequence is not sensed, no activation is performed, which is described in the specification.
      iii. Optionally, the sequence is configured for each resource pool, is correlated with an ID of a resource pool, or is correlated with a UE ID.
      iv. Optionally, optional resources of a sequence 1 and a sequence 2 are the same resources, or different resources. The resources may refer to time-frequency resources.
III. If the sensing information indicates activation, a terminal performs sending/sensing/receiving in a corresponding sensing window; or otherwise, the terminal does not start sending/sensing/receiving in the corresponding window.
   In an actual application, a PSCCH may be used for carrying an activation/deactivation indication.
   a) Optionally, sending/sensing/receiving is performed in a corresponding sensing window only when a terminal has a data packet to be sent/a terminal is triggered to perform a resource selection and it is sensed that information indicates activation.
   b) Optionally, activation of a part or all of the windows is correlated with information of a cast type/service ID/UE ID/geographic location. For example, if UE is at an excessively large distance, an activation signaling of the UE may be ignored (that is, it is considered that the provability of interference is not large).
IV. Optionally, in a case that whether to activate a sensing window and/or a DRX activation time is determined by comparing an energy sensing result with an energy threshold, at least one of the following is satisfied:
   a) A configuration of the threshold:
      i. The threshold is one or more values.
      ii. A configuration method of the threshold is at least one of the following: configured by each resource pool; configured by each terminal; configured according to a logical channel; configured according to a logical channel group; configured according to a QoS; configured according to a CR/CBR; or configured according to a priority (for example, a logical channel priority).
   b) Optionally, in a case that a threshold is configured:
      i. If the sensing result is lower than the threshold, the terminal performs sensing and/or a resource selection in a corresponding dynamic sensing window (if higher than the threshold, the sensing window is skipped; in other words, a next optional activation location is sensed).
   c) Optionally, in a case that a threshold is configured:
      i. If the sensing result is higher than the threshold, the terminal performs sensing and/or a resource selection in a corresponding dynamic sensing window.
      ii. If the sensing result is lower than the threshold, the terminal performs a random resource selection.
   d) Optionally, in a case that two thresholds are configured, (a corresponding behavior of UE:)
      i. A first threshold is defined, and if the sensing result is lower than the threshold, the terminal performs a random resource selection. (If measurement of an RSSI indicates that the interference is small, randomly selection may be performed to save power).
      ii. A second threshold is defined, and if the sensing result is higher than the threshold, the terminal skips a corresponding dynamic sensing window. In other words, the corresponding sensing window is not activated. (If measurement of an RSSI indicates that the interference is excessively large, a resource is not selected in the dynamic window).
      iii. If the sensing result is between the first threshold and the second threshold, sensing/receiving and/or a resource selection is performed in the corresponding window. (If measurement of an RSSI indicates there is a particular degree of interference, the interference is avoided through sensing).
V. Optionally, in a case that whether to activate a sensing window is determined based on sequence sensing, at least one of the following is satisfied.
   a) If the signal is solved by using a pre-defined/configured activation sensing sequence, it is determined to activate a sensing window, and the terminal activates the sensing window.
   b) If the signal is solved by using a pre-defined/configured sensing deactivation sequence, it is determined to deactivate a sensing window, and the terminal deactivates the sensing window.

   In this way, it is not necessary to carry explicit bit information in the PSCCH, thereby improving the compatibility.
VI. A configuration of a corresponding sensing window includes at least one of the following:
   a) one or more start locations of the sensing window (for example, a slot interval from a sensed PSCCH);
   b) one or more lengths of the sensing window;
   c) one or more end locations of the sensing window;
   d) one or more periods of the sensing window; or
   e) the sensing window being a continuous or non-continuous resource.
VII. Pre-define/pre-configure/configure a correspondence between the sensing information/signal and the sensing window, which satisfies at least one of the following:
   a) One piece of sensing information corresponds to one or more sensing windows.
      i. Optionally, a plurality of sensing windows are a plurality of continuously configured sensing windows.
      ii. Optionally, a plurality of sensing windows are periodically configured sensing windows.
   b) A plurality of sequences correspond to different sensing windows, respectively.
      i. For example, a sequence 1 corresponds to a sensing window 1 and a sequence 2 corresponds to a sensing window 2. If the sequence 1 is sensed, the sensing window 1 is activated; and if the sequence 2 is sensed, the sensing window 2 is activated.
      ii. For example, a sequence 1 corresponds to a periodically configured sensing window, and a sequence 2 corresponds to a non-periodically configured sensing window.
   c) A plurality of sensing locations correspond to different sensing windows, respectively.
      i. For example, a location 1 corresponds to a sensing window 1 and a location 2 corresponds to a sensing window 2. If demodulation is successful/an activation signaling is sensed/an energy sensing value satisfies a preset condition at the location 1, the sensing window 1 is activated; or if demodulation is successful/an activation signaling is sensed/an energy sensing value satisfies a preset condition at the location 2, the sensing window 2 is activated.
VIII. The method further includes, if at least one of the following conditions is satisfied, a base station/terminal sends an activation indication. The terminal is a terminal of data to be sent, or a terminal of scheduling.
   A trigger condition for sensing signaling sending may include at least one of the following:
   a) If the terminal reserves/allocates one or more resources, an activation indication is sent.
      In a specific implementation, the activation signaling (equivalent to the foregoing first indication information) may be independent of a resource reservation signaling.
   b) If the terminal sends one or more resource reservation signaling, an activation indication is sent.
      In a specific implementation, the activation signaling may be the same as a resource reservation signaling. In this way, for SCI sensing, in a case that one activation signaling corresponds to blind sensing of a plurality of SCIs/PSCCHs, the effect of energy saving can be achieved.
   c) A correspondence between the activation indication and a dynamic selection window is pre-defined/pre-configured/configured.

   One or more candidate resources indicated by the activation are located in first N of reserved resources, or first N+a slots/symbols/subframes/frames/milliseconds/periods (PSFCH periods/sensing steps/DRX periods), where a is a processing time of a sensing signal/channel or a quantized value of the processing time. For example: N = 32 slots.
IX. The method further includes: sending, by a terminal 1, an activation/deactivation signaling according to a correspondence between the activation/deactivation signaling and a sensing window/resource selection window. A terminal 2 performs sensing/a resource selection in a corresponding sensing window/resource selection window according to the correspondence between activation/deactivation signaling and the sensing window/resource selection window.
   a) The terminal 1 may obtain (optional) a location of the activation/deactivation signaling according to the correspondence between the activation/deactivation signaling and the sensing window and a location of the sensing window, and send the activation/deactivation signaling at the (optional) location.
   b) The terminal 1 may obtain (optional) a location of the activation/deactivation signaling according to the correspondence between the activation/deactivation signaling and the resource selection window/resource selection location, and send the activation/deactivation signaling at the (optional) location.
   c) The terminal 2 may obtain a location of a sensing window according to a correspondence between the activation/deactivation signaling and the sensing window and a location of the activation/deactivation signaling, and perform sensing in the sensing window.
   d) The terminal 2 may obtain a location of a resource selection window/resource selection according to a correspondence between the activation/deactivation signaling and a location of the resource selection window/resource selection and a location of the activation/deactivation signaling, perform a resource selection in the resource selection window, or send information on the location of the resource selection.
X. The method further includes, if at least one of the following conditions is satisfied, sensing by the terminal the signal/channel:
   a) in a case that the terminal has a data packet to be sent;
   b) in a case that the terminal is triggered to perform a resource selection;
   c) in a case that SL _RESOURCE_RESELECTION_COUNTER = 0;
   d) in a case that a resource pool is reconfigured;
   e) in a case that the terminal does not have a reserved resource; or
   f) in a case that the terminal does not have a resource that satisfies a condition.

A description is provided below through embodiments:

### Embodiment 1:

Embodiment 1 may be referred to in FIG. 6a. FIG. 6a illustrates a (de-)activation signaling ((de-)activation signal); a sensing window (sensing window); f indicative of frequency; and t indicative of time. A sensing window 1, a sensing window 2, and a sensing window 3 each include 16 slots.

Embodiment 1 may include the following implementations:
Implementation 1:
   1. A network pre-configures a location and a length of a dynamic resource selection window in a resource pool, where the length is 16 slots. A start location is a location of a logical slot module 16. A relationship between an optional resource location and a corresponding selection window is pre-configured.
   2. Pre-define an activation/deactivation signaling carried in a PSCCH. Pre-configure an optional frequency domain resource of an activation signaling as a highest remaining PRB in the resource pool (for example, a resource ≤ one subchannel size), and an optional location in the time domain as a resource of one slot in front of a dynamic selection window.
   3. If a terminal 1 sends a resource reservation signaling in the sensing window, the terminal sends PSCCH indication information on an activation/deactivation signaling resource corresponding to the sensing window.
   4. If a terminal 2 performs a resource selection, the terminal 2 performs sensing at an optional activation/deactivation signaling location in the resource pool, and if the PSCCH is sensed to carry an activation signaling, the terminal 2 performs sensing in a corresponding dynamic sensing window.
      In the implementation 1, the PSCCH carries an activation signaling for triggering the dynamic sensing window.
Implementation 2:
   1. A network pre-configures a location and a length of a dynamic resource selection window in a resource pool, where the length is 16 slots. A start location is a location of a logical slot module 16. A relationship between an optional resource location and a corresponding selection window is pre-configured.
   2. Pre-define an activation/deactivation signaling carried in a second-stage SCI. Pre-configure an optional frequency domain resource of an activation signaling as a highest remaining PRB in the resource pool (for example, a resource ≤ one subchannel size), and an optional location in the time domain as a resource of one slot in front of a dynamic selection window.
   3. If a terminal 1 sends a resource reservation signaling in the sensing window, the terminal sends second-stage SCI indication information on an activation/deactivation signaling resource corresponding to the sensing window.
   4. If a terminal 2 performs a resource selection, the terminal 2 performs sensing at an optional activation/deactivation signaling location in a resource pool, and if the second-stage SCI is sensed to carry an activation signaling, the terminal 2 performs sensing in a corresponding dynamic sensing window.
      In the implementation 2, the second-stage SCI carries an activation signaling to trigger a dynamic sensing window.

### Embodiment 2:

1. A network pre-configures a location and a length of a dynamic resource selection window in a resource pool, and a relationship between an optional resource location and a corresponding selection window.
2. Configure a threshold of an RSSI/RSRP in the resource pool.
3. Pre-configure a time domain optional location of an activation signaling as a symbol resource where a PSFCH is located.
4. If a terminal 1 sends a resource reservation signaling in the sensing window, the terminal sends indication information on an activation/deactivation signaling resource corresponding to the sensing window.
5. If a terminal 2 performs a resource selection, the terminal 2 performs an RSSI/RSRP measurement at an optional activation signaling location in the resource pool.
   a) If the RSSI/RSRP measurement value < an RSSI/RSRP threshold, the terminal uses a random resource selection.
   b) If the RSSI/RSRP measurement value ≥ an RSSI/RSRP threshold, the terminal performs sensing in a corresponding dynamic sensing window.

### Embodiment 3:

Reference may be made to FIG. 6b. FIG. 6b illustrates a (de-)activation signaling ((de-)activation signal); a sensing window (sensing window); f indicative of frequency; and t indicative of time. A sensing window 1, a sensing window 2, and a sensing window 3 each include 16 slots, and a sensing window 4 includes 32 slots.
1. A network pre-configures a location and a length of a dynamic resource selection window in a resource pool, and a relationship between an optional resource location and a corresponding selection window.
2. Configure a threshold of an RSSI in the resource pool, namely, a first RSSI threshold and a second RSSI threshold.
3. Pre-configure an optional frequency domain resource of an activation signaling as a highest remaining PRB in the resource pool (for example, a resource ≤ one subchannel size), and an optional location in the time domain as a resource of one slot in front of a dynamic selection window.
4. If a terminal 1 sends a resource reservation signaling in the sensing window, the terminal sends indication information on an activation/deactivation signaling resource corresponding to the sensing window.
5. If a terminal 2 performs a resource selection, the terminal 2 performs an RSSI measurement at an optional activation signaling location in the resource pool.
   a) If the RSSI measurement value < a first RSSI threshold, the terminal uses a random resource selection.
   b) If the first RSSI threshold ≤ the RSSI measurement ≤ a second RSSI threshold, the terminal performs sensing in a corresponding dynamic sensing window.
   c) Otherwise, the terminal continues to sense on a subsequent optional activation signaling resource.

### Embodiment 4:

1. A network pre-configures a location and a length of a dynamic resource selection window in a resource pool.
2. Pre-configure a location of an optional resource of an activation signaling, and a relationship between an optional resource location of the activation signaling and a corresponding dynamic selection window.
3. Pre-define a sequence 1 as the activation signaling. Pre-configure an RSRP threshold for energy sensing.
4. If a terminal 1 sends a resource reservation signaling in the sensing window, the terminal sends a sequence 1 on an activation signaling resource corresponding to the sensing window.
6. If a terminal 2 performs a resource selection, the terminal 2 performs sensing at an optional activation signaling location in the resource pool, measures an RSRP, and obtains an RSRP measurement value. If it is the sequence 1 and an RSRP measurement value > an RSRP threshold, sensing is performed in a corresponding dynamic sensing window.

### Embodiment 5:

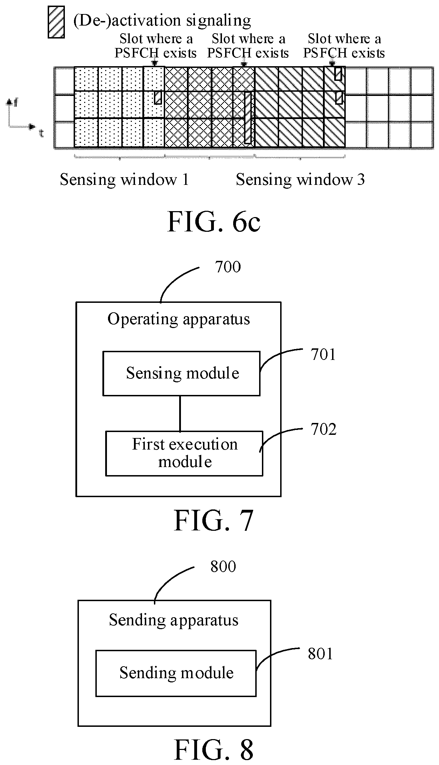

Reference may be made to FIG. 6c. FIG. 6c illustrates a (de-)activation signaling ((de-)activation signal); a sensing window (sensing window); f indicative of frequency; and t indicative of time. A sensing window 1, a sensing window 2, and a sensing window 3 each include 16 slots.
1. A network pre-configures a location and a length of a dynamic resource selection window in a resource pool, where the length is 16 slots. A start location is a location of a logical slot module 16. A relationship between an optional resource location and a corresponding selection window is pre-configured.
2. Pre-define to carry activation/deactivation indication information in a symbol where a PSFCH is located. Activation/deactivation indication information is pre-configured to start to be mapped from a highest PRB of a lowest/highest subchannel corresponding to a PSSCH/SL resource.
3. If a terminal 1 sends a resource reservation signaling in the sensing window, the terminal sends activation/deactivation indication information on an activation/deactivation signaling resource corresponding to the sensing window.
4. If a terminal 2 performs a resource selection, the terminal 2 performs sensing at an optional activation/deactivation signaling location in the resource pool, and if the activation/deactivation indication information is sensed to be activation information, the terminal 2 performs sensing in a corresponding dynamic sensing window.

In Embodiment 5, a symbol in which the PSFCH is located carries activation/deactivation indication information for triggering the dynamic sensing window.

This embodiment of this application may be applied to the internet of vehicles, or wearable devices, and some pedestrian-to-pedestrian (Pedestrian-to-Pedestrian, P2P) scenarios.

In this embodiment of this application, the terminal senses a specific signal/channel, obtains a sensing result, activates/deactivates a sensing window according to the sensing result, and performs sensing in the sensing window.
1. The sensing signal/channel is a PSCCH/PSSCH/PSFCH/DMRS/specific sequence/SCI. A resource of the signal/channel is at a pre-defined/pre-configured/configured location.
2. The sensing result indicates successfully demodulated, and/or the sensing information carries activation/deactivation information, and/or energy sensing information, and/or sequence sensing information.
3. If the sensing information indicates activation, perform sending/sensing/receiving in a corresponding sensing window; or otherwise, the terminal does not start sending/sensing/receiving in the corresponding window.
4. Determine whether to activate a sensing window by comparing an energy sensing result with an energy threshold.
5. Determine whether to activate a sensing window based on sequence sensing.
6. Pre-define/pre-configure/configure a correspondence between the sensing information/signal and the sensing window.
7. If at least one of the following conditions is satisfied, the base station/terminal sends an activation indication. The terminal is a terminal of data to be sent, or a terminal of scheduling.
   1) If one or more resources/one or more resource reservation signaling are reserved, an activation indication is sent.
   2) A correspondence between the activation signaling and a dynamic selection window is pre-defined/pre-configured/configured.
8. A terminal 1 sends an activation/deactivation signaling according to a correspondence between the activation/deactivation signaling and a sensing window/resource selection window. A terminal 2 performs sensing/a resource selection in a corresponding sensing window/resource selection window according to the correspondence between activation/deactivation signaling and the sensing window/resource selection window.

Through this embodiment of this application, the sensing window is triggered based on the activation/deactivation signaling, which is beneficial for the terminal to implement power saving.

It should be noted that, an execution entity of the operating method provided in this embodiment of this application may be an operating apparatus, or a control module, in the operating apparatus, for performing the operating method. In this embodiment of this application, the operating apparatus provided in this embodiment of this application is described by an example in which the operating apparatus performs the operating method.

FIG. 7 is a structural diagram of an operating apparatus according to an embodiment of this application.

As shown in FIG. 7, an operating apparatus 700 includes:
a sensing module 701, configured to sense a first object, to obtain a first sensing result; and
a first execution module 702, configured to perform a first operation correlated with N windows according to the first sensing result, where
N is a positive integer.

Optionally, the first operation includes at least one of the following:
activating a target window;
deactivating a target window;
performing a second operation in a target window;
stopping performing a second operation in a target window;
performing a first resource selection in a target window;
performing a second resource selection in a target window; or
ignoring a target window, where
the target window is a part or all of the N windows; and the second operation includes at least one of a sending operation, a sensing operation, a receiving operation, or a measurement operation.

Optionally, the first object includes at least one of the following: a physical sidelink control channel PSCCH; a physical sidelink shared channel PSSCH; a physical sidelink feedback channel PSFCH; a demodulation reference signal DMRS; a sequence; sidelink control information SCI; a channel state information reference signal CSI-RS; or a phase tracking reference signal PTRS.

Optionally, the first object is at least one of the following: an object in a target format; an object scrambled by a target radio network temporary identifier RNTI; an object scrambled by a target sequence; or an object initialized by a target value.

Optionally, a resource of the first object satisfies at least one of the following:
the resource of the first object is a pre-defined, pre-configured or configured resource; or the resource of the first object is obtained according to a pre-defined, pre-configured or configured rule;
the resource of the first object is located in any of the following: highest numbered L subchannels in a resource pool, highest numbered L physical resource blocks PRBs in a resource pool or a subchannel, highest numbered L in a resource pool or a subchannel, lowest numbered L subchannels in a resource pool, lowest numbered L PRBs in a resource pool or a subchannel, or lowest numbered L PRB groups in a resource pool or a subchannel;
the resource of the first object and a resource of a first channel satisfy a frequency division multiplexing FDM or code division multiplexing CDM relationship, and the first channel is a PSCCH, a PSSCH, or a PSFCH;
the resource of the first object occupies M symbols;
the resource of the first object occupies last M symbols of a first slot;
the resource of the first object is mapped from an i^{th} symbol of a first slot;
the resource of the first object is correlated with a resource configuration of a PSFCH;
the resource of the first object occupies the first available sidelink SL symbol in a first slot; or
a configuration corresponding to the resource of the first object includes at least one of a periodicity configuration and an offset configuration, where
the first slot is a slot where the first object is; and L, M, and i are all positive integers.

Optionally, the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, where
the target priorities are priorities carried by a physical layer, logical channel priorities, or logical channel group priorities; and P, Q, T, and a are all positive integers.

Optionally, the operating apparatus 700 further includes:
a first determining module, configured to determine the first operation corresponding to the first sensing result according to a second correspondence between the first object and an operation, where
the second correspondence is pre-defined, pre-configured or configured.

Optionally, the second correspondence satisfies at least one of the following:
a demodulation result of the first object corresponds to at least one operation;
an information carrying result of the first object corresponds to at least one operation;
a target comparison result corresponds to at least one operation, and the target comparison result is a comparison result of an energy sensing result of the first object and R energy thresholds, where R is a positive integer; or
a sequence sensing result of the first object corresponds to at least one operation.

Optionally, that a demodulation result of the first object corresponds to at least one operation includes at least one of the following:
in a case that the demodulation result of the first object indicates successfully demodulated to the first object, the at least one operation includes at least one of the following: activating a first window; or performing a second operation in a first window; and in a case that the demodulation result of the first object indicates not successfully demodulated to the first object, the at least one operation includes at least one of the following: deactivating a first window; stopping performing a second operation in a first window; or ignoring a first window, where
the second operation is at least one of a sending operation, a measurement operation, a sensing operation, or a receiving operation; and the first window is a part or all of windows corresponding to the first object.

Optionally, that an information carrying result of the first object corresponds to at least one operation includes:
in a case that the information carrying result of the first object indicates that the first object carries first indication information, the at least one operation includes at least one of the following: activating a first window; or performing a second operation in a first window; and in a case that the information carrying result of the first object indicates that the first object carries second indication information, the at least one operation includes at least one of the following: deactivating a first window; stopping performing a second operation in a first window; or ignoring a first window, where
the first indication information is used for instructing to activate a window; the second indication information is used for instructing to deactivate a window; the second operation is at least one of a sending operation, a measurement operation, a sensing operation, or a receiving operation; and the first window is a part or all of windows corresponding to the first object.

Optionally, that a sequence sensing result of the first object corresponds to at least one operation includes any of the following:
in a case that the sequence sensing result of the first object indicates that a first sequence is sensed, the at least one operation includes at least one of the following: activating a first window; or performing a second operation in a first window; and in a case that the sequence sensing result of the first object indicates that a second sequence is sensed, the at least one operation includes at least one of the following: activating a first window; or performing a second operation in a first window;
in a case that the sequence sensing result of the first object indicates that a second sequence is sensed, the at least one operation includes at least one of the following: activating a first window; or performing a second operation in a first window;
in a case that the sequence sensing result of the first object indicates that a sequence of the first object is sensed to be a third sequence, the at least one operation includes at least one of the following: activating a first window; performing a second operation in a first window; and in a case that the sequence sensing result of the first object indicates that a sequence of the first object is sensed to be a fourth sequence, the at least one operation includes at least one of the following: activating a first window; or performing a second operation in a first window, where
the second operation is at least one of a sending operation, a measurement operation, a sensing operation, or a receiving operation; and the first window is a part or all of windows corresponding to the first object.

Optionally, that a target comparison result corresponds to at least one operation includes any of the following:
in a case that R is equal to 1, if the target comparison result indicates that the energy sensing result of the first object is less than the energy threshold, the at least one operation includes at least one of the following: activating a first window; or performing a second operation in a first window; or if the target comparison result is that the energy sensing result of the first object is greater than or equal to the energy threshold, the operation: ignoring a first window; deactivating a first window; or stopping performing a second operation in a first window;
in a case that R is equal to 1, if the target comparison result indicates that the energy sensing result of the first object is greater than or equal to the energy threshold, the at least one operation includes at least one of the following: activating a first window; performing a second operation in a first window; or performing a first resource selection in a first window; or if the target comparison result indicates that the energy sensing result of the first object is less than the energy threshold, the at least one operation includes at least one of the following: deactivating a first window; stopping performing a second operation in a first window; or performing a second resource selection in a first window; or
in a case that the R energy thresholds include a first energy threshold and a second energy threshold and that the first energy threshold is less than the second energy threshold, if the target comparison result indicates that the energy sensing result of the first object is less than or equal to the first energy threshold, the at least one operation includes at least one of the following: performing a second resource selection in a first window; if the target comparison result indicates that the energy sensing result of the first object is greater than or equal to the second energy threshold, the at least one operation includes at least one of the following: ignoring a first window; deactivating a first window; or stopping performing a second operation in a first window; or if the target comparison result indicates that the energy sensing result of the first object is greater than or equal to the first energy threshold and less than the second energy threshold, the operation includes at least: activating a first window; performing a second operation in a first window; or performing a first resource selection in a first window, where
the second operation is at least one of a sending operation, a measurement operation, a sensing operation, or a receiving operation; and the first window is a part or all of windows corresponding to the first object.

Optionally, the first sensing result is represented by any of the following:
M bits, where the M bits include a first value and a second value, the first value is used for instructing to activate a window, the second value is used for instructing to deactivate a window, both the first value and the second value include at least one value, and M is a positive integer; or
a code point, where the code point includes a first-type code point and a second-type code point, the first-type code point is used for instructing to activate a window, the second-type code point is used for instructing to deactivate a window, and both the first-type code point and the second-type code point include at least one code point.

Optionally, the first sensing result may include at least one of the following:
a demodulation result of the first object;
an information carrying result of the first object;
an energy sensing result of the first object; or
a sequence sensing result of the first object.

Optionally, in a case that the first sensing result includes the demodulation result of the first object, the first operation satisfies any of the following:
in a case that the demodulation result of the first object indicates successfully demodulated to the first object, the first operation includes at least one of the following: activating the target window; or performing the second operation in the target window; and in a case that the demodulation result of the first object indicates not successfully demodulated to the first object, the first operation includes at least one of the following: deactivating the target window; stopping performing the second operation in the target window; or ignoring the target window, where
the target window is a part or all of the N windows; and the second operation includes at least one of a sending operation, a sensing operation, a receiving operation, or a measurement operation.

Optionally, in a case that the first sensing result includes the information carrying result of the first object, the first operation satisfies:
in a case that the information carrying result of the first object indicates that the first object carries the first indication information, the first operation includes at least one of the following: activating the target window; or performing the second operation in the target window; and in a case that the information carrying result of the first object indicates that the first object carries the second indication information, the first operation includes at least one of the following: deactivating the target window; stopping performing the second operation in the target window; or ignoring the target window, where
the first indication information is used for instructing to activate a window; the second indication information is used for instructing to deactivate a window; the target window is a part or all of the N windows; and the second operation includes at least one of a sending operation, a sensing operation, a receiving operation, or a measurement operation.

Optionally, in a case that the first sensing result includes the sequence sensing result of the first object, the first operation satisfies any of the following:
in a case that the sequence sensing result of the first object indicates that the first sequence is sensed, the first operation includes at least one of the following: activating the target window; or performing the second operation in the target window; and in a case that the sequence sensing result of the first object indicates that the second sequence is sensed, the first operation includes at least one of the following: deactivating the target window; stopping performing the second operation in the target window; or ignoring the target window;
in a case that the sequence sensing result of the first object indicates that a sequence is sensed, the first operation includes at least one of the following: activating the target window; or performing the second operation in the target window;
in a case that the sequence sensing result of the first object indicates that the sequence of the first object is sensed to be a third sequence, the first operation includes at least one of the following: activating the target window; or performing the second operation in the target window; and in a case that the sequence sensing result of the first object indicates that the first object is sensed to be a fourth sequence, the first operation includes at least one of the following: activating the target window; or performing the second operation in the target window, where
the target window is a part or all of the N windows; and the second operation includes at least one of a sending operation, a sensing operation, a receiving operation, or a measurement operation.

Optionally, in a case that the first sensing result includes the energy sensing result of the first object, the first operation is determined based on a comparison result of the energy sensing result of the first object and R energy thresholds, where R is a positive integer.

Optionally, the first operation satisfies any of the following:
in a case that R is equal to 1, if the energy sensing result of the first object is less than the energy threshold, the first operation includes at least one of the following: activating the target window; or performing the second operation in the target window; or if the energy sensing result of the first object is greater than or equal to the energy threshold, the first operation includes at least: ignoring the target window; deactivating the target window; or stopping performing the second operation in the target window;
in a case that R is equal to 1, if the energy sensing result of the first object is greater than or equal to the energy threshold, the first operation includes at least one of the following: activating the target window; performing the second operation in the target window; or performing the first resource selection in the target window; or if the energy sensing result of the first object is less than the energy threshold, the first operation includes at least one of the following: deactivating the target window; stopping performing the second operation in the target window; or performing the second resource selection in the target window; or
in a case that the R energy thresholds include a first energy threshold and a second energy threshold and the first energy threshold is less than the second energy threshold, if the energy sensing result of the first object is less than or equal to the first energy threshold, the first operation includes at least one of the following: performing the second resource selection in the target window; if the energy sensing result of the first object is greater than or equal to the second energy threshold, the first operation includes at least one of the following: ignoring the target window; deactivating the target window; or stopping the second operation in the target window; or if the energy sensing result of the first object is greater than or equal to the first energy threshold and less than the second energy threshold, the first operation includes at least: activating the target window; performing the second operation in the target window; or performing the first resource selection in the target window, where
the target window is a part or all of the N windows; and the second operation includes at least one of a sending operation, a sensing operation, a receiving operation, or a measurement operation.

Optionally, the N windows are determined based on a third correspondence between the first object and a window, where
the third correspondence is pre-defined, pre-configured or configured.

Optionally, the third correspondence satisfies at least one of the following:
one piece of information carried by the first object corresponds to at least one window;
different first objects correspond to different windows; or
different sensing locations of the first object correspond to different windows.

Optionally, configurations of the N windows are determined based on the third correspondence, where
the configurations of the N windows include at least one of the following:
a start location of at least one window of the N windows;
a window length of at least one window of the N windows;
an end location of at least one window of the N windows; or
a period of at least one window of the N windows.

Optionally, the N windows satisfy at least one of the following:
the N windows are semi-statically configured windows;
the N windows are dynamically configured windows;
the N windows are continuously configured windows;
the N windows are periodically configured windows; or
the N windows are non-periodically configured windows.

Optionally, the first execution module 702 is further configured to:
in a case that second information associated with the first object satisfies a first condition, perform the first operation corresponding to the sensing result in the N windows, where
the second information includes at least one of the following: a resource pool identifier; a terminal identifier; a service identifier; a cast type; geographic location information; or distance information.

Optionally, the first object be sent by a target end, and the target end is a network-side device or a second terminal.

Optionally, the operating apparatus 700 further includes:
a second determining module, configured to determine a target resource selection window corresponding to the first object according to the correspondence between the first object and the resource selection window; and
a second execution module, configured to perform a resource selection in the target resource selection window.

Optionally, the sensing module 701 is further configured to: in a case that a second condition is satisfied, sense the first object, where
the second condition satisfies at least one of the following:
the first terminal has a data packet to be sent;
the first terminal is triggered to perform a resource selection;
a value of an SL resource reselection counter is equal to 0;
a resource pool is reconfigured;
the first terminal does not have a reserved resource; or
the first terminal does not have a resource that satisfies a condition.

The operating apparatus in this embodiment of this application may be an apparatus, or may be a component, an integrated circuit, or a chip in a terminal. The apparatus may be a mobile terminal or a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, or the like, which are not specifically limited in this embodiment of this application.

The operating apparatus in this embodiment of this application may be an apparatus having an operating system. The operating system may be an Android (Android) operating system, may be an ios operating system, or may be another possible operating system, which is not specifically limited in this embodiment of this application.

The operating apparatus 700 provided in this embodiment of this application can implement the processes implemented in the method embodiment of FIG. 4, and in addition the same technical effect can be achieved, which are not repeated herein in order to avoid duplication.

It should be noted that, an execution entity of the sending method provided in this embodiment of this application may be a sending apparatus, or a control module, in the sending apparatus, for performing the sending method. In this embodiment of this application, the sending apparatus provided in this embodiment of this application is described by an example in which the sending apparatus performs the sending method.

FIG. 8 is a structural diagram of a sending apparatus according to an embodiment of this application.

As shown in FIG. 8, a sending apparatus 800 includes:
a sending module 801, configured to send a first object.

Optionally, the sending module 801 is further configured to: in a case that the third condition is satisfied, send the first object, where
the third condition satisfies at least one of the following:
at least one resource is reserved for a target end;
at least one resource is allocated to a target end; or
a target end sends at least one resource reservation signaling.

Optionally, the first object is sent based on at least one of the following:
a correspondence between the first object and a window; or
a correspondence between the first object and a resource selection window.

Optionally, the first object includes at least one of the following: a physical sidelink control channel PSCCH; a physical sidelink shared channel PSSCH; a physical sidelink feedback channel PSFCH; a demodulation reference signal DMRS; a sequence; sidelink control information SCI; a channel state information reference signal CSI-RS; or a phase tracking reference signal PTRS.

Optionally, the first object is at least one of the following: an object in a target format; an object scrambled by a target radio network temporary identifier RNTI; an object scrambled by a target sequence; or an object initialized by a target value.

Optionally, a resource of the first object satisfies at least one of the following:
the resource of the first object is a pre-defined, pre-configured or configured resource; or the resource of the first object is obtained according to a pre-defined, pre-configured or configured rule;
the resource of the first object is located in any of the following: highest numbered L subchannels in a resource pool, highest numbered L physical resource blocks PRBs in a resource pool or a subchannel, highest numbered L in a resource pool or a subchannel, lowest numbered L subchannels in a resource pool, lowest numbered L PRBs in a resource pool or a subchannel, or lowest numbered L PRB groups in a resource pool or a subchannel;
the resource of the first object and a resource of a first channel satisfy a frequency division multiplexing FDM or code division multiplexing CDM relationship, and the first channel is a PSCCH, a PSSCH, or a PSFCH;
the resource of the first object occupies M symbols;
the resource of the first object occupies last M symbols of a first slot;
the resource of the first object is mapped from an i^{th} symbol of a first slot;
the resource of the first object is correlated with a resource configuration of a PSFCH;
the resource of the first object occupies the first available sidelink SL symbol in a first slot; or
a configuration corresponding to the resource of the first object includes at least one of a periodicity configuration and an offset configuration, where
the first slot is a slot where the first object is; and L, M, and i are all positive integers.

Optionally, the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, where
the target priorities are priorities carried by a physical layer, logical channel priorities, or logical channel group priorities; and P, Q, T, and a are all positive integers.

The sending apparatus in this embodiment of this application may be an apparatus, or may be a component, an integrated circuit, or a chip in a network-side device. The network-side device may include but is not limited to the type of the network-side device 12 listed above, which is not specifically limited in this embodiment of this application.

The sending apparatus 800 provided in this embodiment of this application can implement the processes implemented in the method embodiment of FIG. 5, and in addition the same technical effect can be achieved, which are not repeated herein in order to avoid duplication.

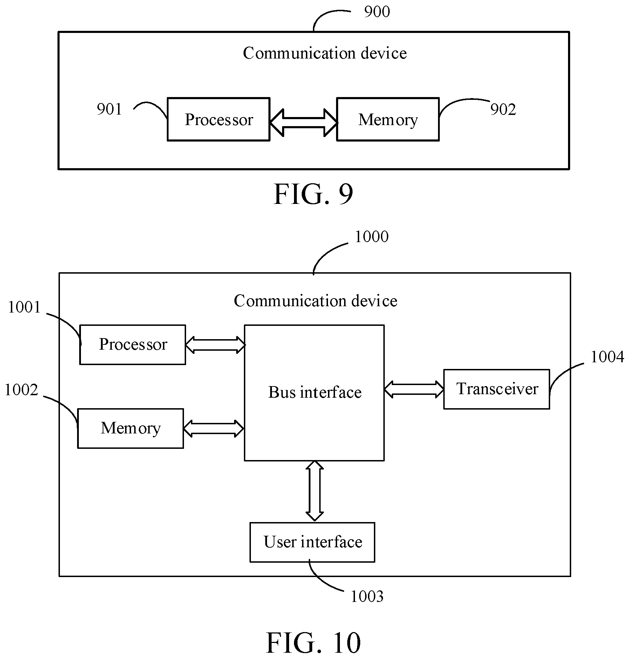

Optionally, as shown in FIG. 9, an embodiment of this application further provides a communication device 900, including a processor 901, a memory 902, a program or instructions stored on the memory 902 and capable of being run on the processor 901. For example, in a case that the communication device 900 is a terminal, the program or the instructions, when executed by the processor 901, implement the processes of the foregoing method embodiment in FIG. 4, and in addition the same technical effect can be achieved. In a case that the communication device 900 is a network-side device, the program or the instructions, when executed by the processor 901, implement the processes of the foregoing method embodiment in FIG. 5, and in addition the same technical effect can be achieved, which are not repeated herein in order to avoid duplication.

FIG. 10 is a second structural diagram of a communication device according to an embodiment of this application. A communication device 1000 is a schematic structural diagram of a hardware structure of a communication device that implements the embodiments of this application. As shown in FIG. 10, the communication device 1000 includes: a processor 1001, a memory 1002, a user interface 1003, a transceiver 1004, and a bus interface.

In FIG. 10, a bus architecture may include any number of interconnected buses and bridges, specifically linked together by various circuits of one or more processors represented by a processor 1001 and memories represented by a memory 1002. The bus architecture may further link various other circuits such as peripheral devices, voltage regulators, and power management circuits together, which are well known in the art, and therefore is not further described herein. The bus interface provides an interface. The transceiver 1004 may be a plurality of elements, that is, including a transmitter and a receiver, for providing units for communicating with various other apparatuses on a transmission medium. For different user devices, the user interface 1003 may alternatively be an interface that can be externally/internally connected to a required device, and the connected device includes but is not limited to a keypad, a display, a speaker, a microphone, a joystick, or the like.

The processor 1001 is responsible for managing the bus architecture and general processing, and the memory 1002 may store data used by a processor 2601 during operations.

In this embodiment of this application, the communication device 1000 further includes: a program or an instruction stored on the memory 1002 and capable of running on the processor 1001. The processor 1001 invokes the program or the instructions in the memory 1002 to perform the processes in the method embodiment in FIG. 4 or FIG. 5, and in addition the same technical effect can be achieved, which are not repeated herein in order to avoid duplication.

This embodiment of this application further provides a computer-readable storage medium, storing therein a program or an instruction, where the program or instruction, when executed by a processor, implements various processes of the operation method embodiment, and may implement the same technical effects, which will not be described in detail herein again to avoid repetition. The computer-readable storage medium may include a flash drive, a read-only memory (Read-Only Memory, ROM), a random access memory (Random Access Memory, RAM), a magnetic disk, or an optical disc.

This embodiment of this application further provides a readable storage medium, storing therein a program or an instruction, where the program or instruction, when executed by a processor, implements various processes of the method embodiment in FIG. 4 or FIG. 5, and may implement the same technical effects, which will not be described in detail herein again to avoid repetition.

The processor is a processor in the terminal described in the foregoing embodiment. The readable storage medium includes a computer-readable storage medium, for example, a Read-Only Memory (Read-Only Memory, ROM), a Random Access Memory (Random Access Memory, RAM), a magnetic disk, an optical disc or the like.

This embodiment of this application further provides a chip, including a processor and a communication interface, where the communication interface is coupled to the processor. The processor is configured to run a program or an instruction on a network-side device to implement various processes of the method embodiment in FIG. 4 or FIG. 5, and may implement the same technical effects, which will not be described in detail herein again to avoid repetition.

It should be understood that, the chip mentioned in this embodiment of this application may further be referred to as a system-level chip, a system chip, a chip system, a system on chip, or the like.

It may be understood that, the embodiments described in the present disclosure may be implemented by using software, hardware, firmware, middleware, microcode, or a combination thereof. For hardware implementation, a module, a unit, a sub-module, and a subunit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in this application, or a combination of the above.

It is to be noted that the terms "include", "comprise" and any other variants mean to cover the non-exclusive inclusion, so that the process, method, object, or apparatus which include a series of elements not only include those elements, but also include other elements which are not clearly listed, or include inherent elements of the process, method, object, or apparatus. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. An operating method, performed by a first terminal, comprising:
sensing a first object, to obtain a first sensing result; and
performing a first operation correlated with N windows according to the first sensing result, wherein
N is a positive integer.

2. The method according to claim 1, wherein the first operation comprises at least one of the following:
activating a target window;
deactivating a target window;
performing a second operation in a target window;
stopping performing a second operation in a target window;
performing a first resource selection in a target window;
performing a second resource selection in a target window; or
ignoring a target window, wherein
the target window is a part or all of the N windows; and the second operation comprises at least one of a sending operation, a sensing operation, a receiving operation, or a measurement operation.

3. The method according to claim 1, wherein the first object comprises at least one of the following: a physical sidelink control channel PSCCH; a physical sidelink shared channel PSSCH; a physical sidelink feedback channel PSFCH; a demodulation reference signal DMRS; a sequence; sidelink control information SCI; a channel state information reference signal CSI-RS; or a phase tracking reference signal PTRS.

4. The method according to claim 1, wherein the first object is at least one of the following: an object in a target format; an object scrambled by a target radio network temporary identifier RNTI; an object scrambled by a target sequence; or an object initialized by a target value.

5. The method according to claim 1, wherein a resource of the first object satisfies at least one of the following:
the resource of the first object is a pre-defined, pre-configured or configured resource; or the resource of the first object is obtained according to a pre-defined, pre-configured or configured rule;
the resource of the first object is located in any of the following: highest numbered L subchannels in a resource pool, highest numbered L physical resource blocks PRBs in a resource pool or a subchannel, highest numbered L in a resource pool or a subchannel, lowest numbered L subchannels in a resource pool, lowest numbered L PRBs in a resource pool or a subchannel, or lowest numbered L PRB groups in a resource pool or a subchannel;
the resource of the first object and a resource of a first channel satisfy a frequency division multiplexing FDM or code division multiplexing CDM relationship, and the first channel is a PSCCH, a PSSCH, or a PSFCH;
the resource of the first object occupies M symbols;
the resource of the first object occupies last M symbols of a first slot;
the resource of the first object is mapped from an i^{th} symbol of a first slot;
the resource of the first object is correlated with a resource configuration of a PSFCH;
the resource of the first object occupies the first available sidelink SL symbol in a first slot; or
a configuration corresponding to the resource of the first object comprises at least one of a periodicity configuration and an offset configuration, wherein
the first slot is a slot where the first object is; and L, M, and i are all positive integers.

6. The method according to claim 1, wherein the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, wherein
the target priorities are priorities carried by a physical layer, logical channel priorities, or logical channel group priorities; and P, Q, T, and a are all positive integers.

7. The method according to claim 1, wherein before performing a first operation correlated with N windows according to the first sensing result, the method also comprises:
determining the first operation corresponding to the first sensing result according to a second correspondence between the first object and an operation, wherein
the second correspondence is pre-defined, pre-configured or configured.

8. The method according to claim 7, wherein the second correspondence satisfies at least one of the following:
a demodulation result of the first object corresponds to at least one operation;
an information carrying result of the first object corresponds to at least one operation;
a target comparison result corresponds to at least one operation, and the target comparison result is a comparison result of an energy sensing result of the first object and R energy thresholds, wherein R is a positive integer; or
a sequence sensing result of the first object corresponds to at least one operation.

9. The method according to claim 8, wherein that a demodulation result of the first object corresponds to at least one operation comprises at least one of the following:
in a case that the demodulation result of the first obj ect indicates successfully demodulated to the first object, the at least one operation comprises at least one of the following: activating a first window; or performing a second operation in a first window; and in a case that the demodulation result of the first object indicates not successfully demodulated to the first object, the at least one operation comprises at least one of the following: deactivating a first window; stopping performing a second operation in a first window; or ignoring a first window, wherein
the second operation is at least one of a sending operation, a measurement operation, a sensing operation, or a receiving operation; and the first window is a part or all of windows corresponding to the first object.

10. The method according to claim 8, wherein that an information carrying result of the first object corresponds to at least one operation comprises:
in a case that the information carrying result of the first object indicates that the first object carries first indication information, the at least one operation comprises at least one of the following: activating a first window; or performing a second operation in a first window; and in a case that the information carrying result of the first object indicates that the first object carries second indication information, the at least one operation comprises at least one of the following: deactivating a first window; stopping performing a second operation in a first window; or ignoring a first window, wherein
the first indication information is used for instructing to activate a window; the second indication information is used for instructing to deactivate a window; the second operation is at least one of a sending operation, a measurement operation, a sensing operation, or a receiving operation; and the first window is a part or all of windows corresponding to the first object.

11. The method according to claim 8, wherein that a sequence sensing result of the first object corresponds to at least one operation comprises any of the following:
in a case that the sequence sensing result of the first object indicates that a first sequence is sensed, the at least one operation comprises at least one of the following: activating a first window; or performing a second operation in a first window; and in a case that the sequence sensing result of the first object indicates that a second sequence is sensed, the at least one operation comprises at least one of the following: activating a first window; or performing a second operation in a first window;
in a case that the sequence sensing result of the first obj ect indicates that a second sequence is sensed, the at least one operation comprises at least one of the following: activating a first window; or performing a second operation in a first window;
in a case that the sequence sensing result of the first object indicates that a sequence of the first object is sensed to be a third sequence, the at least one operation comprises at least one of the following: activating a first window; performing a second operation in a first window; and in a case that the sequence sensing result of the first object indicates that a sequence of the first object is sensed to be a fourth sequence, the at least one operation comprises at least one of the following: activating a first window; or performing a second operation in a first window, wherein
the second operation is at least one of a sending operation, a measurement operation, a sensing operation, or a receiving operation; and the first window is a part or all of windows corresponding to the first object.

12. The method according to claim 8, wherein that a target comparison result corresponds to at least one operation comprises any of the following:
in a case that R is equal to 1, if the target comparison result indicates that the energy sensing result of the first object is less than the energy threshold, the at least one operation comprises at least one of the following: activating a first window; or performing a second operation in a first window; or if the target comparison result is that the energy sensing result of the first object is greater than or equal to the energy threshold, the operation: ignoring a first window; deactivating a first window; or stopping performing a second operation in a first window;
in a case that R is equal to 1, if the target comparison result indicates that the energy sensing result of the first object is greater than or equal to the energy threshold, the at least one operation comprises at least one of the following: activating a first window; performing a second operation in a first window; or performing a first resource selection in a first window; or if the target comparison result indicates that the energy sensing result of the first object is less than the energy threshold, the at least one operation comprises at least one of the following: deactivating a first window; stopping performing a second operation in a first window; or performing a second resource selection in a first window; or
in a case that the R energy thresholds comprise a first energy threshold and a second energy threshold and that the first energy threshold is less than the second energy threshold, if the target comparison result indicates that the energy sensing result of the first object is less than or equal to the first energy threshold, the at least one operation comprises at least one of the following: performing a second resource selection in a first window; if the target comparison result indicates that the energy sensing result of the first object is greater than or equal to the second energy threshold, the at least one operation comprises at least one of the following: ignoring a first window; deactivating a first window; or stopping performing a second operation in a first window; or if the target comparison result indicates that the energy sensing result of the first object is greater than or equal to the first energy threshold and less than the second energy threshold, the operation comprises at least: activating a first window; performing a second operation in a first window; or performing a first resource selection in a first window, wherein
the second operation is at least one of a sending operation, a measurement operation, a sensing operation, or a receiving operation; and the first window is a part or all of windows corresponding to the first object.

13. The method according to claim 1, wherein the first sensing result is represented by any of the following:
M bits, wherein the M bits comprise a first value and a second value, the first value is used for instructing to activate a window, the second value is used for instructing to deactivate a window, both the first value and the second value comprise at least one value, and M is a positive integer; or
a code point, wherein the code point comprises a first-type code point and a second-type code point, the first-type code point is used for instructing to activate a window, the second-type code point is used for instructing to deactivate a window, and both the first-type code point and the second-type code point comprise at least one code point.

14. The method according to any of claims 1 to 13, wherein the first sensing result comprises at least one of the following:
the demodulation result of the first object;
the information carrying result of the first object;
the energy sensing result of the first object; or
the sequence sensing result of the first object.

15. The method according to claim 14, wherein in a case that the first sensing result comprises the demodulation result of the first object, the first operation satisfies any of the following:
in a case that the demodulation result of the first obj ect indicates successfully demodulated to the first object, the first operation comprises at least one of the following: activating the target window; or performing the second operation in the target window; and in a case that the demodulation result of the first object indicates not successfully demodulated to the first object, the first operation comprises at least one of the following: deactivating the target window; stopping performing the second operation in the target window; or ignoring the target window, wherein
the target window is a part or all of the N windows; and the second operation comprises at least one of a sending operation, a sensing operation, a receiving operation, or a measurement operation.

16. The method according to claim 14, wherein in a case that the first sensing result comprises the information carrying result of the first object, the first operation satisfies:
in a case that the information carrying result of the first object indicates that the first object carries the first indication information, the first operation comprises at least one of the following: activating the target window; or performing the second operation in the target window; and in a case that the information carrying result of the first object indicates that the first object carries the second indication information, the first operation comprises at least one of the following: deactivating the target window; stopping performing the second operation in the target window; or ignoring the target window, wherein
the first indication information is used for instructing to activate a window; the second indication information is used for instructing to deactivate a window; the target window is a part or all of the N windows; and the second operation comprises at least one of a sending operation, a sensing operation, a receiving operation, or a measurement operation.

17. The method according to claim 14, wherein in a case that the first sensing result comprises the sequence sensing result of the first object, the first operation satisfies any of the following:
in a case that the sequence sensing result of the first object indicates that the first sequence is sensed, the first operation comprises at least one of the following: activating the target window; or performing the second operation in the target window; and in a case that the sequence sensing result of the first object indicates that the second sequence is sensed, the first operation comprises at least one of the following: deactivating the target window; stopping performing the second operation in the target window; or ignoring the target window;
in a case that the sequence sensing result of the first object indicates that a sequence is sensed, the first operation comprises at least one of the following: activating the target window; or performing the second operation in the target window;
in a case that the sequence sensing result of the first object indicates that the sequence of the first object is sensed to be a third sequence, the first operation comprises at least one of the following: activating the target window; or performing the second operation in the target window; and in a case that the sequence sensing result of the first object indicates that the first object is sensed to be a fourth sequence, the first operation comprises at least one of the following: activating the target window; or performing the second operation in the target window, wherein
the target window is a part or all of the N windows; and the second operation comprises at least one of a sending operation, a sensing operation, a receiving operation, or a measurement operation.

18. The method according to claim 14, wherein in a case that the first sensing result comprises the energy sensing result of the first object, the first operation is determined based on a comparison result of the energy sensing result of the first object and R energy thresholds, wherein R is a positive integer.

19. The method according to claim 18, wherein the first operation satisfies any of the following:
in a case that R is equal to 1, if the energy sensing result of the first object is less than the energy threshold, the first operation comprises at least one of the following: activating the target window; or performing the second operation in the target window; or if the energy sensing result of the first object is greater than or equal to the energy threshold, the first operation comprises at least: ignoring the target window; deactivating the target window; or stopping performing the second operation in the target window;
in a case that R is equal to 1, if the energy sensing result of the first object is greater than or equal to the energy threshold, the first operation comprises at least one of the following: activating the target window; performing the second operation in the target window; or performing the first resource selection in the target window; or if the energy sensing result of the first object is less than the energy threshold, the first operation comprises at least one of the following: deactivating the target window; stopping performing the second operation in the target window; or performing the second resource selection in the target window; or
in a case that the R energy thresholds comprise a first energy threshold and a second energy threshold and the first energy threshold is less than the second energy threshold, if the energy sensing result of the first object is less than or equal to the first energy threshold, the first operation comprises at least one of the following: performing the second resource selection in the target window; if the energy sensing result of the first object is greater than or equal to the second energy threshold, the first operation comprises at least one of the following: ignoring the target window; deactivating the target window; or stopping the second operation in the target window; or if the energy sensing result of the first object is greater than or equal to the first energy threshold and less than the second energy threshold, the first operation comprises at least: activating the target window; performing the second operation in the target window; or performing the first resource selection in the target window, wherein
the target window is a part or all of the N windows; and the second operation comprises at least one of a sending operation, a sensing operation, a receiving operation, or a measurement operation.

20. The method according to claim 1, wherein the N windows are determined based on a third correspondence between the first object and a window, wherein
the third correspondence is pre-defined, pre-configured or configured.

21. The method according to claim 20, wherein the third correspondence satisfies at least one of the following:
one piece of information carried by the first object corresponds to at least one window;
different first objects correspond to different windows; or
different sensing locations of the first object correspond to different windows.

22. The method according to claim 20, wherein configurations of the N windows are determined based on the third correspondence, wherein
the configurations of the N windows comprise at least one of the following:
a start location of at least one window of the N windows;
a window length of at least one window of the N windows;
an end location of at least one window of the N windows; or
a period of at least one window of the N windows.

23. The method according to claim 1, wherein the N windows satisfy at least one of the following:
the N windows are semi-statically configured windows;
the N windows are dynamically configured windows;
the N windows are continuously configured windows;
the N windows are periodically configured windows; or
the N windows are non-periodically configured windows.

24. The method according to claim 1, wherein performing the first operation corresponding to the sensing result in the N windows comprises:
in a case that second information associated with the first object satisfies a first condition, performing the first operation corresponding to the sensing result in the N windows, wherein
the second information comprises at least one of the following: a resource pool identifier; a terminal identifier; a service identifier; a cast type; geographic location information; or distance information.

25. The method according to claim 1, wherein the first object is sent by a target end, and the target end is a network-side device or a second terminal.

26. The method according to claim 1, wherein the sensing a first object comprises:
in a case that a second condition is satisfied, sensing the first object, wherein
the second condition satisfies at least one of the following:
the first terminal has a data packet to be sent;
the first terminal is triggered to perform a resource selection;
a value of an SL resource reselection counter is equal to 0;
a resource pool is reconfigured;
the first terminal does not have a reserved resource; or
the first terminal does not have a resource that satisfies a condition.

27. A sending method, performed by a target end, wherein the target end is a network-side device or a second terminal, and the method comprises:
sending a first object.

28. The method according to claim 27, wherein the sending a first object comprises:
in a case that a third condition is satisfied, sending the first object, wherein
the third condition satisfies at least one of the following:
at least one resource is reserved for a target end;
at least one resource is allocated to a target end; or
a target end sends at least one resource reservation signaling.

29. The method according to claim 27, wherein the first object is sent based on a correspondence between the first object and a window.

30. The method according to claim 27, wherein the first object comprises at least one of the following: a physical sidelink control channel PSCCH; a physical sidelink shared channel PSSCH; a physical sidelink feedback channel PSFCH; a demodulation reference signal DMRS; a sequence; sidelink control information SCI; a channel state information reference signal CSI-RS; or a phase tracking reference signal PTRS.

31. The method according to claim 27, wherein the first object is at least one of the following: an object in a target format; an object scrambled by a target radio network temporary identifier RNTI; an object scrambled by a target sequence; or an object initialized by a target value.

32. The method according to claim 27, wherein a resource of the first object satisfies at least one of the following:
the resource of the first object is a pre-defined, pre-configured or configured resource; or the resource of the first object is obtained according to a pre-defined, pre-configured or configured rule;
the resource of the first object is located in any of the following: highest numbered L subchannels in a resource pool, highest numbered L physical resource blocks PRBs in a resource pool or a subchannel, highest numbered L in a resource pool or a subchannel, lowest numbered L subchannels in a resource pool, lowest numbered L PRBs in a resource pool or a subchannel, or lowest numbered L PRB groups in a resource pool or a subchannel;
the resource of the first object and a resource of a first channel satisfy a frequency division multiplexing FDM or code division multiplexing CDM relationship, and the first channel is a PSCCH, a PSSCH, or a PSFCH;
the resource of the first object occupies M symbols;
the resource of the first object occupies last M symbols of a first slot;
the resource of the first object is mapped from an i^{th} symbol of a first slot;
the resource of the first object is correlated with a resource configuration of a PSFCH;
the resource of the first object occupies the first available sidelink SL symbol in a first slot; or
a configuration corresponding to the resource of the first object comprises at least one of a periodicity configuration and an offset configuration, wherein
the first slot is a slot where the first object is; and L, M, and i are all positive integers.

33. The method according to claim 27, wherein the first object has a first correspondence with a resource selection or a resource selection configuration, and the first correspondence satisfies at least one of the following:
periodicity information of resource reservations corresponding to different first objects are different;
periodicity information of resource reservations corresponding to different sensing locations of the first object are different;
quality of service associated with P first objects corresponds to Q resource selections or resource selection configurations;
target priorities associated with P first objects correspond to Q resource selections or resource selection configurations; or
a candidate resource corresponding to the first object is located in a target resource, the target resource is located before a reserved resource, and the target resource and the reserved resource are at an interval of T or T+a resources, wherein
the target priorities are priorities carried by a physical layer, logical channel priorities, or logical channel group priorities; and P, Q, T, and a are all positive integers.

34. An operating apparatus, comprising:
a sensing module, configured to sense a first object, to obtain a first sensing result; and
a first execution module, configured to perform a first operation correlated with N windows according to the first sensing result, wherein
N is a positive integer.

35. The operating apparatus according to claim 34, wherein the first operation comprises at least one of the following:
activating a target window;
deactivating a target window;
performing a second operation in a target window;
stopping performing a second operation in a target window;
performing a first resource selection in a target window;
performing a second resource selection in a target window; or
ignoring a target window, wherein
the target window is a part or all of the N windows; and the second operation comprises at least one of a sending operation, a sensing operation, a receiving operation, or a measurement operation.

36. The operating apparatus according to claim 34, wherein the first sensing result comprises at least one of the following:
a demodulation result of the first object;
an information carrying result of the first object;
an energy sensing result of the first object; or
a sequence sensing result of the first object.

37. A sending apparatus, comprising:
a sending module, configured to send a first object.

38. The sending apparatus according to claim 37, wherein the sending module is further configured to: in a case that a third condition is satisfied, send the first object, wherein
the third condition satisfies at least one of the following:
at least one resource is reserved for a target end;
at least one resource is allocated to a target end; or
a target end sends at least one resource reservation signaling.

39. A communication device, comprising a processor, a memory, and a program or instruction stored on the memory and executable on the processor, wherein the program or the instruction, when executed by the processor, implements the steps of the operating method according to any of claims 1 to 26, or the steps of the sending method according to any of claims 27 to 33.

40. A readable storage medium, storing a program or an instruction, wherein the program or instruction, when executed by a processor, implements the steps of the operating method according to any of claims 1 to 26, or the steps of the sending method according to any of claims 27 to 33.

41. A chip, comprising a processor and a communication interface, wherein the communication interface is coupled to the processor, and the processor is configured to run a program or an instruction to implement the operating method according to any of claims 1 to 26, or to implement the sending method according to any of claims 27 to 33.

42. A computer program product, stored in a non-volatile medium, wherein the computer program product, when executed by at least one processor, implements the operating method according to any of claims 1 to 26, or implements the sending method according to any of claims 27 to 33.

43. A communication device, configured to perform the steps of the operating method according to any of claims 1 to 26, or the steps of the sending method according to any of claims 27 to 33.
